(19) Europäisches Patentamt
European Patent Office
Office européen des brevets

(11) **EP 3 797 398 B1**

(12) **FASCICULE DE BREVET EUROPEEN**

(45) Date de publication et mention
de la délivrance du brevet:
**17.07.2024 Bulletin 2024/29**

(21) Numéro de dépôt: **19737165.1**

(22) Date de dépôt: **22.05.2019**

(51) Classification Internationale des Brevets (IPC):
**G06T 3/4061** *(2024.01)* **G06T 5/50** *(2006.01)*

(52) Classification Coopérative des Brevets (CPC):
**G06T 3/4061; G06T 5/50;** G06T 2207/10036;
G06T 2207/10041; G06T 2207/20221;
G06T 2207/30181

(86) Numéro de dépôt international:
**PCT/FR2019/051171**

(87) Numéro de publication internationale:
**WO 2019/224482 (28.11.2019 Gazette 2019/48)**

(54) **PROCÉDÉ D'AUGMENTATION DE RÉSOLUTION SPATIALE D'UNE IMAGE MULTI-SPECTRALE À PARTIR D'UNE IMAGE PANCHROMATIQUE**

VERFAHREN ZUR ERHÖHUNG DER RÄUMLICHEN AUFLÖSUNG EINES MULTISPEKTRALEN BILDES AUS EINEM PANCHROMATISCHEN BILD

METHOD FOR INCREASING THE SPATIAL RESOLUTION OF A MULTISPECTRAL IMAGE FROM A PANCHROMATIC IMAGE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.05.2018 FR 1854233**

(43) Date de publication de la demande:
**31.03.2021 Bulletin 2021/13**

(73) Titulaire: **Airbus Defence and Space SAS
31402 Toulouse Cedex 4 (FR)**

(72) Inventeur: **POILVÉ, Hervé
31320 PECHABOU (FR)**

(74) Mandataire: **Ipside
6, Impasse Michel Labrousse
31100 Toulouse (FR)**

(56) Documents cités:
• **LOLLI SIMONE ET AL: "Haze Correction for Contrast-Based Multispectral Pansharpening", IEEE GEOSCIENCE AND REMOTE SENSING LETTERS, IEEE SERVICE CENTER, NEW YORK, NY, US, vol. 14, no. 12, 1 December 2017 (2017-12-01), pages 2255 - 2259, XP011674124, ISSN: 1545-598X, [retrieved on 20171204], DOI: 10.1109/LGRS.2017.2761021**
• **ANDREA GARZELLI ET AL: "Multispectral Pansharpening with Radiative Transfer-Based Detail-Injection Modeling for Preserving Changes in Vegetation Cover", 9 May 2018 (2018-05-09), XP055536580, Retrieved from the Internet <URL:https://www.preprints.org/manuscript/201805.0149> [retrieved on 20181130], DOI: 10.20944/preprints201805.0149.v1**
• **HUSSEIN A. ALY ET AL: "A Regularized Model-Based Optimization Framework for Pan-Sharpening", IEEE TRANSACTIONS ON IMAGE PROCESSING., vol. 23, no. 6, 1 June 2014 (2014-06-01), US, pages 2596 - 2608, XP055536466, ISSN: 1057-7149, DOI: 10.1109/TIP.2014.2316641**

- **LINHAI JING ET AL: "An image fusion method taking into account phenological analogies and haze", INTERNATIONAL JOURNAL OF REMOTE SENSING, vol. 32, no. 6, 16 March 2011 (2011-03-16), GB, pages 1675 - 1694, XP055536497, ISSN: 0143-1161, DOI: 10.1080/01431161003621593**
- **ISRAA AMRO ET AL: "A survey of classical methods and new trends in pansharpening of multispectral images", EURASIP JOURNAL ON ADVANCES IN SIGNAL PROCESSING, vol. 2011, no. 1, 1 December 2011 (2011-12-01), XP055536586, DOI: 10.1186/1687-6180-2011-79**

**Description**

## DOMAINE TECHNIQUE

La présente invention appartient au domaine du traitement d'images acquises par un instrument d'observation optique embarqué à bord d'un engin spatial, tel qu'un satellite, ou d'un engin aérien évoluant à haute altitude, et concerne plus particulièrement un procédé d'augmentation de résolution spatiale d'une image multi-spectrale à partir d'une image panchromatique de résolution spatiale supérieure à celle de l'image multi-spectrale.

## ÉTAT DE LA TECHNIQUE

En effet, les satellites d'observation optique très haute résolution spatiale acquièrent généralement des couples d'images d'une même scène, formés par une image multi-spectrale de la scène, dite « image MS », et d'une image panchromatique de ladite scène, dite « image PAN ».

L'image MS est en pratique elle-même formée par au moins deux images élémentaires, correspondant à des mesures effectuées dans des bandes de longueurs d'ondes respectives différentes. Par exemple, une image MS peut-être constituée de quatre images élémentaires :

- une image élémentaire dans la bande des longueurs d'ondes rouges (par exemple [625-695] nanomètres),
- une image élémentaire dans la bande des longueurs d'ondes vertes (par exemple [530-590] nanomètres),
- une image élémentaire dans la bande des longueurs d'ondes bleues (par exemple [450-520] nanomètres),
- une image élémentaire dans la bande des longueurs d'ondes proche infrarouge (par exemple [760-890] nanomètres).

L'image PAN est une image dans une bande de longueurs d'ondes plus large que celles des images élémentaires de l'image MS, qui couvre par exemple directement toutes les longueurs d'ondes visibles. L'image PAN présente la résolution spatiale la plus élevée réalisée par le satellite d'observation optique, tandis que la résolution spatiale de l'image MS est moindre, généralement diminuée d'un facteur simple (2 ou 4) par rapport à celle de l'image PAN. De ce fait, l'image PAN présente généralement un pas d'échantillonnage spatial (« Spatial Sampling Distance » ou SSD, ou encore « Ground Sampling Distance » ou GSD dans la littérature anglo-saxonne) plus petit que celui de l'image MS. Ainsi, la scène comporte un nombre de pixels plus important dans l'image PAN que dans chacune des images élémentaires de l'image MS, de sorte qu'un pixel dans l'image PAN représente une surface plus petite de la scène qu'un pixel d'une image élémentaire de l'image MS.

Pour une meilleure exploitation possible de ce couple d'images MS et PAN, diverses méthodes, connues sous le nom de « PAN-sharpening » dans la littérature anglo-saxonne, ont été développées pour augmenter la résolution spatiale des images MS à partir des images PAN.

L'objectif des méthodes connues est principalement de fournir un rendu visuel en vraies couleurs. Ces méthodes connues, telle que la méthode de Gram-Schmidt, ne s'attachent pas à la réalité physique de la mesure telle qu'elle peut être exprimée en valeurs de réflectance. En d'autres termes, les images MS obtenues après augmentation de résolution spatiale ne sont pas toujours réalistes en ce qu'elles peuvent être sensiblement différentes de ce qu'elles auraient été si elles avaient été directement acquises avec la même résolution spatiale que l'image PAN.

L'article « Haze Correction for Contrast-Based Multispectral Pansharpening » de S. Lolli, L. Alparone, A. Garzelli et G. Vivone, IEEE Geoscience and Remote Sensing Letters, vol. 14, no. 12, Déc. 2017, divulgue un procédé de PAN-sharpening s'appuyant sur un modèle atmosphérique. La luminance énergétique (aussi appelée radiance) de chemin, qui correspond à une énergie diffusée par divers constituants atmosphériques avant d'atteindre l'ouverture d'un instrument sans être réfléchie par la surface de la terre, apparaît comme un brouillard (haze en anglais) perturbant les représentations dans les bandes MS. Selon les solutions développées ici, cette radiance de chemin est estimée et soustraite de chaque bande avant modulation spatiale sur la base de l'image PAN, puis réinsérée après fusion.

Dans l'article « Multispectral Pansharpening with Radiative Transfer-Based Detail-Injection Modeling for Preserving Changes in Végétation Cover » de A. Garzelli, N. Aiazzi, L. Alparone, S. Lolli et G. Vivone, XP055538580, 9 mai 2018, un procédé de PAN-sharpening est décrit, qui tire avantage d'une correction du terme de radiance introduit par l'atmosphère, durant l'étape de fusion, sur la base de techniques d'estimation empiriques ou fondées sur des modèles.

L'article « A Regularized Model-Based Optimization Framework for Pan-Sharpening » de H. A. Aly et G. Sharma, IEEE Transactions on Image Processing, vol. 23, no. 6, 1er juin 2014, divulgue une technique de PAN-sharpening reposant sur la minimisation d'une fonction objective comprenant la somme d'erreurs résiduelles au carré dans des modèles d'observation physiquement motivés d'images MS et d'image PAN, et un terme de régulation dépendant de corrélations.

Des améliorations sont toutefois possibles en termes de flexibilité de prise en compte des variations spatiales de réflectance.

## EXPOSÉ DE L'INVENTION

Le présent descriptif a pour objectif de remédier à tout ou partie des limitations des solutions de l'art antérieur, notamment celles exposées ci-avant, en proposant une solution qui permette d'augmenter la résolution spatiale d'une image MS à partir d'une image PAN de manière plus réaliste que les solutions de l'art antérieur.

A cet effet, et selon un premier aspect, le descriptif concerne un procédé d'augmentation de résolution spatiale d'une image multi-spectrale, dite « image MS », à partir d'une image panchromatique, dite « image PAN », de résolution spatiale supérieure à la résolution spatiale de l'image MS, ladite image MS étant constituée de pixels représentatifs de la réflectance multi-spectrale, dite « réflectance MS », d'une scène, ladite image PAN étant constituée de pixels représentatifs de la réflectance panchromatique, dite « réflectance PAN », de ladite scène. Le procédé d'augmentation de résolution spatiale comporte, pour une portion au moins de ladite scène :

-    une obtention de valeurs particulières de paramètres d'un modèle de scène, ce modèle de scène permettant de simuler une réflectance de la portion de scène dans des bandes de longueurs d'ondes correspondant à l'image MS et à l'image PAN, respectivement appelées réflectance MS simulée et réflectance PAN simulée, en fonction d'hypothèses associées aux paramètres sur cette portion de scène, les valeurs particulières de paramètres étant obtenues en fonction d'une ressemblance entre la réflectance MS simulée et la réflectance MS pour cette portion de scène,
-    une détermination d'une variation relative de la réflectance MS simulée par rapport à la réflectance PAN simulée au voisinage des valeurs particulières de paramètres,
-    une estimation d'un écart entre la réflectance PAN et une réflectance d'une image PAN à résolution spatiale diminuée obtenue par filtrage passe-bas de ladite image PAN, cet écart étant appelé modulation PAN haute résolution spatiale,
-    une détermination d'une image MS à résolution spatiale augmentée par sur-échantillonnage de ladite image MS et par ajout à la réflectance MS de l'image MS sur-échantillonnée d'un correctif correspondant à un produit de la modulation PAN haute résolution spatiale et de cette variation relative.

Par « obtention » de valeurs, on entend dans l'ensemble de la présente demande une étape permettant de se procurer ces valeurs, notamment par détermination ou par réception.

Par « détermination », on entend dans l'ensemble de la présente demande une obtention par des opérations actives, notamment par calcul, extraction (par exemple à partir de tables de correspondance), dérivation ou apprentissage machine (par exemple via des réseaux neuronaux ou un partitionnement en k-moyennes - appelé « k-means » en anglais).

Comme exposé plus bas, les valeurs particulières de paramètres peuvent notamment correspondre à une maximisation de la ressemblance entre la réflectance MS simulée et la réflectance MS. Dans d'autres modes, elles peuvent correspondre à des correspondances entre la réflectance MS simulée et la réflectance MS obtenues par apprentissage machine.

De manière surprenante, l'image MS à résolution spatiale augmentée peut être déterminée en simulant la variation relative de la réflectance MS par rapport à la réflectance PAN, à la fois dans ses composantes de réflectance MS et de réflectance PAN, sur la base d'un modèle de scène paramétré.

Dans des réalisations avantageuses, ce procédé peut offrir une grande flexibilité, tant pour représenter des réalités physiques observées avec un degré de précision souhaité que pour simuler des situations fictives. De plus, dans des mises en oeuvre particulières, le procédé peut rendre possible des réalisations relativement simples et économiques par rapport à des solutions existantes, grâce à une exploitation duale du modèle de scène paramétré, tant pour la réflectance MS que pour la réflectance PAN.

Par exemple, le procédé d'augmentation de résolution spatiale comporte, pour une portion au moins de la scène :

-    une détermination de valeurs de paramètres d'un modèle de scène permettant de paramétrer de manière optimale ledit modèle de scène par rapport à la réflectance MS de l'image MS, dites « valeurs optimales MS »,
-    une détermination d'un gradient des valeurs des paramètres permettant d'optimiser le paramétrage du modèle de scène par rapport à une réflectance PAN déterminée en fonction du modèle de scène et des valeurs optimales MS, dit « gradient d'optimisation », représentatif de la variation des valeurs des paramètres par rapport à la variation de réflectance PAN,
-    une détermination d'un vecteur d'injection représentatif de la variation de réflectance MS associée à la variation de réflectance PAN pour la portion de scène considérée, en fonction du modèle de scène et du gradient d'optimisation.

Le procédé d'augmentation de résolution spatiale comporte en outre un calcul d'une image MS à résolution spatiale augmentée en fonction de l'image MS, de l'image PAN et du vecteur d'injection.

Par « paramétrer de manière optimale » ou « optimiser », on entend une optimisation de type numérique, et non nécessairement mathématique. Autrement dit, le résultat de l'optimisation n'est pas nécessairement un optimum, mais résulte d'opérations d'optimisation balisées par un ou plusieurs seuils, par exemple un niveau de convergence souhaité, un nombre d'itérations ou un niveau de précision.

Ainsi, le procédé d'augmentation de résolution spatiale utilise un modèle de scène. De tels modèles de scène sont connus et permettent de simuler la réflectance pour différentes hypothèses faites sur la portion de scène observée. Ces hypothèses correspondent à différentes valeurs de paramètres du modèle de scène, les paramètres permettant de décrire les éléments de différente nature présents dans la portion de scène observée (sol, couvert végétal, eau, etc.), ainsi que des caractéristiques de ladite portion de scène observée (brillances, ombrage, pigmentation, etc.). De tels modèles de scène permettent de simuler la réflectance dans toute bande de longueurs d'ondes, y compris les bandes de longueurs d'ondes respectives de l'image PAN et des images élémentaires de l'image MS, et ce en tenant compte des spécificités propres à chacune desdites bandes de longueurs d'ondes considérées. En effet, la réflectance mesurée d'une portion d'une scène n'est pas le même dans toutes les bandes de longueurs d'ondes, et dépend notamment des différents éléments présents dans la portion de scène observée et des caractéristiques de ladite portion de scène.

Le procédé d'augmentation de résolution spatiale utilise le modèle de scène pour déterminer comment les variations de réflectance PAN, observées dans l'image PAN, doivent être injectées dans l'image MS pour obtenir une image MS à résolution spatiale augmentée plus conforme à la réalité physique de la mesure.

Dans des réalisations particulières, pour l'estimation de la modulation PAN haute résolution spatiale, l'image PAN à résolution spatiale diminuée a une résolution spatiale correspondant à la résolution spatiale de l'image MS.

Dans des variantes, les résolutions spatiales diffèrent. Par exemple, on choisit pour l'image PAN à résolution spatiale diminuée une résolution effective un peu plus basse que celle de l'image MS, tout en se ramenant à un pas d'échantillonnage correspondant à celui de l'image MS. On obtient ainsi un facteur de modulation PAN légèrement renforcé, ce qui permet d'intégrer implicitement des facteurs d'imprécision ou d'approximation dans le déroulement des opérations.

Dans des modes particuliers, l'obtention des valeurs particulières de paramètres comprend pour la portion de scène considérée un paramétrage optimisé du modèle de scène par rapport à la ressemblance entre la réflectance MS simulée et la réflectance MS.

Plus particulièrement, le procédé d'augmentation de résolution spatiale peut utiliser l'image MS, au moins, pour déterminer des valeurs optimales MS des paramètres du modèle de scène pour la portion de scène considérée. En effet, l'image MS, bien que présentant une résolution spatiale inférieure à celle de l'image PAN, contient plus d'informations sur le comportement spectral de la portion de scène que l'image PAN. Par conséquent, l'utilisation de l'image MS permet d'obtenir des valeurs des paramètres du modèle de scène (valeurs optimales MS) qui permettent de modéliser de manière plus précise le comportement spectral de la portion de scène qu'en utilisant uniquement l'image PAN. Les valeurs optimales MS correspondent donc à un point de fonctionnement du modèle de scène au niveau duquel on se place par la suite pour déterminer, à partir du modèle de scène, comment les variations de réflectance PAN doivent être injectées dans l'image MS.

Dans une approche alternative, la détermination des valeurs particulières de paramètres correspondant à l'image MS est réalisée non par une méthode d'optimisation (minimisation d'un critère), mais par l'utilisation d'un réseau de neurones permettant de traduire directement la réflectance MS en des valeurs de l'ensemble des paramètres du modèle. L'apprentissage de ce réseau de neurones peut être réalisé en balayant l'ensemble du domaine des valeurs attendues pour chacun des paramètres sur le type de scène observée, et en exploitant des valeurs spectrales correspondantes de l'image MS simulées à partir du modèle.

Selon des modes particuliers, la détermination de la variation relative de la réflectance MS simulée par rapport à la réflectance PAN simulée comprend :

- une détermination d'un gradient de valeurs de paramètres du modèle de scène par rapport à la réflectance PAN simulée au voisinage de la réflectance PAN simulée correspondant aux valeurs particulières de paramètres, dite réflectance PAN simulée de référence,
- une détermination d'une variation de la réflectance MS simulée en fonction des valeurs de paramètres au voisinage des valeurs particulières de paramètres,
- une composition de la variation de la réflectance MS simulée et du gradient des valeurs de paramètres, donnant la variation relative de la réflectance MS simulée par rapport à la réflectance PAN simulée.

La détermination du gradient peut notamment comprendre pour la portion de scène considérée un paramétrage optimisé du modèle de scène par rapport à une ressemblance entre la réflectance PAN simulée et un voisinage de la réflectance PAN simulée de référence.

Par exemple, une fois déterminées les valeurs optimales MS, le modèle de scène peut être utilisé pour déterminer le gradient d'optimisation. Le gradient d'optimisation est représentatif de la variation des valeurs des paramètres du modèle de scène relativement à la variation de réflectance PAN, au voisinage de la réflectance PAN simulée fournie par le modèle de scène pour les valeurs optimales MS (c'est-à-dire au voisinage du point de fonctionnement susmentionné déterminé à partir de l'image MS).

A partir du gradient d'optimisation, le modèle de scène peut être utilisé pour déterminer le vecteur d'injection. Le vecteur d'injection permet de modéliser, compte tenu des valeurs optimales MS déterminées pour le modèle de scène qui permettent de simuler la réalité physique de la mesure dans toutes les bandes de longueurs d'ondes, comment une variation de réflectance PAN doit être répercutée dans la réflectance MS de l'image MS.

Dans des modes particuliers de mise en oeuvre, le procédé d'augmentation de résolution spatiale peut comporter en outre l'une ou plusieurs des caractéristiques suivantes, prises isolément ou selon toutes les combinaisons techniquement possibles.

Dans des modes particuliers de mise en oeuvre, le calcul de l'image MS à résolution spatiale augmentée comporte :

- un sur-échantillonnage spatial de l'image MS de sorte à obtenir une image MS à pas d'échantillonnage spatial plus petit que le pas d'échantillonnage spatial initial, dite « image MS sur-échantillonnée »,
- un filtrage passe-bas de l'image PAN de sorte à obtenir une image PAN à résolution spatiale diminuée,
- une correction, dans la portion de scène, de l'image MS sur-échantillonnée en fonction de la variation relative et de la modulation PAN haute résolution spatiale, par exemple en fonction du vecteur d'injection, de l'image PAN et de l'image PAN à résolution spatiale diminuée.

Le filtrage passe-bas de l'image PAN permet d'obtenir une image PAN à résolution spatiale diminuée en conservant son pas d'échantillonnage spatial initial, c'est-à-dire une estimation de ce qu'aurait été l'image PAN si elle avait été acquise avec la même résolution spatiale que l'image MS, puis sur-échantillonnée. En comparant l'image PAN et l'image PAN à résolution spatiale diminuée, il est donc possible d'estimer une modulation haute résolution spatiale de la réflectance PAN de l'image PAN, c'est-à-dire la partie de la réflectance PAN de l'image PAN qui n'a pu être mesurée que parce que la résolution spatiale de l'image PAN est supérieure à celle de l'image MS.

Ensuite, le ou les vecteurs d'injection calculés permettent de convertir la modulation haute résolution spatiale de la réflectance PAN en modulation haute résolution spatiale de la réflectance MS conforme à la réalité physique de la mesure.

Dans des modes particuliers de mise en oeuvre, la détermination du gradient d'optimisation met en oeuvre un algorithme de Gauss-Newton.

Selon une réalisation particulière, le paramétrage optimisé comprend, pour la portion de scène considérée, une optimisation d'une fonction de coût comportant :

- un premier terme, dit « fonction de réflectance », représentatif d'une ressemblance entre le voisinage de la réflectance PAN simulée de référence et la réflectance PAN simulée pour les valeurs de paramètres considérées, et
- un deuxième terme, dit « fonction de connaissance a priori », représentatif d'une ressemblance entre les valeurs de paramètres considérées et une connaissance a priori sur les paramètres du modèle de scène.

Dans un mode spécifique de mise en oeuvre de cette réalisation, la connaissance a priori sur les paramètres du modèle de scène est fonction des valeurs particulières de paramètres.

Dans des modes particuliers de mise en oeuvre, le gradient d'optimisation est déterminé par optimisation d'une fonction de coût comportant au moins un premier terme, dit « fonction de réflectance », représentatif d'une ressemblance, pour la portion de scène considérée, entre la réflectance PAN déterminée en fonction du modèle de scène et des valeurs optimales MS et une réflectance fournie par le modèle de scène pour les valeurs de paramètres considérées.

Dans des modes particuliers de mise en oeuvre, la fonction de coût comporte en outre un second terme, dit « fonction de connaissance a priori », représentatif d'une ressemblance, pour la portion de scène considérée, entre les valeurs de paramètres considérées et une connaissance a priori sur les paramètres du modèle de scène.

Dans des modes particuliers de mise en oeuvre, la connaissance a priori sur les paramètres du modèle de scène est calculée en fonction des valeurs optimales MS.

Dans des modes particuliers de mise en oeuvre, le vecteur d'injection est calculé en fonction du gradient d'optimisation et en fonction d'une matrice de variation du modèle de scène représentative de la variation de réflectance MS par rapport à la variation des valeurs des paramètres du modèle de scène.

La détermination d'une variation relative de la réflectance de l'image MS par rapport à la variation relative de l'image PAN à un point de fonctionnement du modèle correspondant à la réflectance MS considérée peut être obtenue par d'autres approches, par exemple par apprentissage d'un réseau de neurones. On peut ainsi faire varier les valeurs de paramètres du modèle autour de ce point de fonctionnement, et réaliser l'apprentissage du réseau de neurones sur les variations relatives observées simultanément sur les réflectances MS et PAN. Cet apprentissage étant réalisé, on peut obtenir par le réseau de neurones la traduction la plus probable de la variation relative de l'image PAN dans les différentes bandes MS.

Dans des modes particuliers de mise en oeuvre, la portion de scène correspond à un pixel et on détermine la variation relative, qui peut par exemple prendre la forme d'un vecteur d'injection, pour chaque pixel.

Dans des modes particuliers de mise en oeuvre, les pixels étant classifiés en groupes de pixels et la portion de scène correspondant à un des groupes de pixels, on détermine la variation relative, qui peut par exemple prendre la forme d'un vecteur d'injection, pour chaque groupe de pixels. Le procédé peut notamment comporter une classification des pixels en groupes de pixels.

Dans des modes particuliers de mise en oeuvre, on détermine la variation relative, qui peut par exemple prendre la forme d'un vecteur d'injection, d'un groupe de pixels en fonction d'une valeur médiane ou d'une valeur moyenne des réflectances MS du groupe de pixels considéré.

Dans des modes particuliers de mise en oeuvre, le modèle de scène comporte un modèle de réflectance au sol et un modèle atmosphérique.

Dans des modes particuliers de mise en oeuvre, le procédé d'augmentation de résolution spatiale comporte une conversion préalable des valeurs des pixels de l'image MS et de l'image PAN en valeurs de réflectance MS et de réflectance PAN au sol ou en sommet d'atmosphère.

Selon un second aspect, le descriptif concerne un produit programme d'ordinateur comportant un ensemble d'instructions de code de programme qui, lorsqu'elles sont exécutées par un processeur, configurent ledit processeur pour mettre en oeuvre un procédé d'augmentation de résolution spatiale selon l'un quelconque des modes de mise en oeuvre de l'invention.

Selon un troisième aspect, le descriptif concerne un système de traitement d'image par augmentation de résolution spatiale d'une image multi-spectrale, dite « image MS », à partir d'une image panchromatique, dite « image PAN », de résolution spatiale supérieure à la résolution spatiale de l'image MS, l'image MS étant constituée de pixels représentatifs d'une réflectance multi-spectrale, dite « réflectance MS » d'une scène, l'image PAN étant constituée de pixels représentatifs d'une réflectance panchromatique, dite « réflectance PAN » de la scène. Le système de traitement d'image comporte au moins un processeur configuré, pour une portion au moins de la scène, pour :

- obtenir des valeurs particulières de paramètres d'un modèle de scène, ce modèle de scène permettant de simuler une réflectance de cette portion de scène dans des bandes de longueurs d'ondes correspondant à l'image MS et à l'image PAN, respectivement appelées réflectance MS simulée et réflectance PAN simulée, en fonction d'hypothèses associées aux paramètres sur cette portion de scène, les valeurs particulières de paramètres étant obtenues en fonction d'une ressemblance entre la réflectance MS simulée et la réflectance MS pour cette portion de scène,
- déterminer une variation relative de la réflectance MS simulée par rapport à la réflectance PAN simulée au voisinage des valeurs particulières de paramètres,
- estimer un écart entre la réflectance PAN et une réflectance d'une image PAN à résolution spatiale diminuée obtenue par filtrage passe-bas de ladite image PAN, cet écart étant appelé modulation PAN haute résolution spatiale,
- déterminer une image MS à résolution spatiale augmentée par sur-échantillonnage de ladite image MS et par ajout à la réflectance MS de l'image MS sur-échantillonnée d'un correctif correspondant à un produit de la modulation PAN haute résolution spatiale et de la variation relative.

Ledit au moins un processeur est avantageusement configuré pour mettre en oeuvre un procédé d'augmentation de résolution spatiale selon l'un quelconque des modes de mise en oeuvre du procédé.

## PRÉSENTATION DES FIGURES

L'invention sera mieux comprise à la lecture de la description suivante, donnée à titre d'exemple nullement limitatif, et faite en se référant aux figures qui représentent :

- Figure 1 : une représentation schématique d'un satellite d'observation en orbite terrestre,
- Figure 2 : un diagramme représentant les principales étapes d'un procédé d'augmentation de résolution spatiale,
- Figure 3 : un diagramme représentant un premier exemple de mise en oeuvre du procédé d'augmentation de résolution spatiale,
- Figure 4 : un diagramme représentant un second exemple de mise en oeuvre du procédé d'augmentation de résolution spatiale,
- Figure 5 : un diagramme représentant un troisième exemple de mise en oeuvre du procédé d'augmentation de résolution spatiale,
- Figure 6 : un diagramme représentant un quatrième exemple de mise en oeuvre du procédé d'augmentation de résolution spatiale,
- Figure 7 : un schéma d'un dispositif d'augmentation de résolution spatiale correspondant aux mises en oeuvre du procédé des figures 2 à 6.

Dans ces figures, des références identiques d'une figure à une autre désignent des éléments identiques ou analogues. Pour des raisons de clarté, les éléments représentés ne sont pas à l'échelle, sauf mention contraire.

## DESCRIPTION DÉTAILLÉE DE MODES DE RÉALISATION

Dans la suite de la description, on considère de manière non limitative le cas d'un traitement d'images acquises depuis un engin spatial de type satellite. Il convient toutefois de préciser que l'invention est également applicable à des images acquises par un instrument d'observation optique embarqué à bord d'un engin aérien (avion, ballon, drone, etc.), par exemple un engin aérien à haute altitude (altitude supérieure à 10 kilomètres).

En outre, dans la suite de la description, on considère de manière non limitative le cas où l'instrument d'observation optique est adapté à acquérir simultanément une image multi-spectrale, dite « image MS », et une image panchromatique, dite « image PAN », d'une même scène survolée par ledit satellite. Il convient toutefois de préciser que l'invention est également applicable à des images MS et PAN acquises par deux instruments d'observation optiques différents, pouvant être par exemple embarqués dans un même satellite ou dans des satellites différents (voire dans des engins différents, respectivement spatial et aérien). Par conséquent, l'invention est également applicable au cas d'images MS et PAN acquises à des instants différents, dès lors que celles-ci sont comparables en ce que, notamment, elles représentent sensiblement la même scène observée avec sensiblement la même ligne de visée, et de préférence avec sensiblement les mêmes conditions d'ensoleillement.

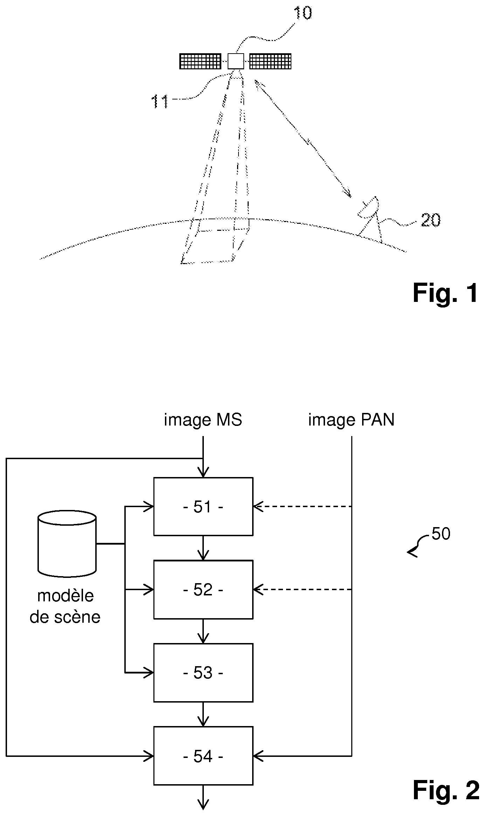

La figure 1 représente schématiquement un satellite 10 en orbite terrestre, configuré pour observer une scène à la surface de la Terre. L'orbite terrestre est par exemple une orbite défilante, par exemple une orbite basse (« Low Earth Orbit » ou LEO) ou moyenne (« Medium Earth Orbit » ou MEO), de sorte que la scène observée par le satellite varie au cours du temps, du fait au moins du déplacement dudit satellite 10 par rapport à la Terre.

De manière conventionnelle, le satellite 10 embarque un instrument d'observation 11 optique qui permet d'acquérir une image MS et une image PAN de la scène observée.

L'image MS est en pratique elle-même formée par un nombre $N_j$ d'images élémentaires ($N_j \geq 2$), correspondant au rayonnement reçu dans des bandes de longueurs d'ondes respectives différentes. Par exemple, une image MS peut-être constituée de quatre images élémentaires ($N_j$ = 4) :

- une image élémentaire dans la bande des longueurs d'ondes rouges, dite « bande R » (par exemple [625-695] nanomètres),
- une image élémentaire dans la bande des longueurs d'ondes vertes, dite « bande G » (par exemple [530-590] nanomètres),
- une image élémentaire dans la bande des longueurs d'ondes bleues, dite « bande B » (par exemple [450-520] nanomètres),
- une image élémentaire dans la bande des longueurs d'ondes proche infrarouge, dite « bande NIR » (par exemple [760-890] nanomètres).

L'image PAN correspond au rayonnement reçu dans une bande de longueurs d'ondes par exemple plus large que celles des images élémentaires de l'image MS, qui couvre par exemple directement toutes les longueurs d'ondes visibles. Par exemple, l'image PAN correspond au rayonnement reçu dans une bande de longueurs d'ondes [450-745] nanomètres.

L'image PAN présente une résolution spatiale plus élevée que chacune des images élémentaires de l'image MS, ainsi qu'un pas d'échantillonnage spatial plus petit que chacune desdites images élémentaires de l'image MS, de sorte qu'un pixel dans l'image PAN représente une surface plus petite de la scène qu'un pixel d'une image élémentaire de l'image MS. De manière conventionnelle, la résolution spatiale d'une image correspond à la taille, par exemple exprimée en mètres, du plus petit objet qui peut être détecté dans la scène représentée par cette image. Plus la taille du plus petit objet détectable diminue, plus la résolution spatiale de cette image augmente. Le pas d'échantillonnage spatial correspond à la distance au sol, par exemple exprimée en mètres, séparant deux pixels adjacents de l'image.

Une fois l'image MS et l'image PAN acquises par l'instrument d'observation 11 optique du satellite 10, lesdites images MS et PAN sont mémorisées pour être transmises à une station sol 20, lorsque le satellite 10 survole ladite station sol 20. Une fois transmises à une station sol 20, l'image MS et l'image PAN sont soumises à différents traitements qui sont considérés comme connus de l'homme de l'art. Ces traitements comportent notamment la correction géométrique préalable desdites images MS et PAN, pour les mettre par exemple en cohérence dans un même système de référencement prédéterminé. L'image MS et l'image PAN sont ensuite fournies à un dispositif de traitement (non représenté sur les figures) qui peut effectuer en temps différé les traitements visant à augmenter la résolution spatiale de l'image MS à partir de l'image PAN, en mettant en oeuvre un procédé 50 d'augmentation de résolution spatiale.

Le dispositif de traitement comporte par exemple un circuit de traitement comportant un ou plusieurs processeurs et des moyens de mémorisation (disque dur magnétique, mémoire électronique, disque optique, etc.) dans lesquels sont mémorisés des données et un produit programme d'ordinateur, sous la forme d'un ensemble d'instructions de code de programme à exécuter pour mettre en oeuvre tout ou partie des étapes du procédé 50 d'augmentation de résolution spatiale. Alternativement ou en complément, le circuit de traitement comporte un ou des circuits logiques programmables (FPGA, PLD, etc.), et/ou un ou des circuits intégrés spécialisés (ASIC), et/ou un ensemble de composants électroniques discrets, etc. adaptés à mettre en oeuvre tout ou partie des étapes du procédé 50 d'augmentation de résolution spatiale.

En d'autres termes, le circuit de traitement correspond à un ensemble de moyens configurés de façon logicielle (produit programme d'ordinateur spécifique) et/ou matérielle (FPGA, PLD, ASIC, etc.) pour mettre en oeuvre les différentes étapes du procédé 50 d'augmentation de résolution spatiale.

Le dispositif de traitement peut inclure des fonctionnalités dans un même appareil ou dans plusieurs agissant en coopération. Il peut par ailleurs être prévu pour un traitement au sol, un traitement embarqué, ou une combinaison des deux modes de traitement.

L'image MS est constituée de pixels représentatifs de la réflectance multi-spectrale de la scène observée dans chacune des $N_j$ bandes de longueurs d'ondes considérées, dite « réflectance MS ». L'image PAN est constituée de pixels représentatifs de la réflectance panchromatique de ladite scène, dite « réflectance PAN ».

Les réflectances MS et PAN sont de préférence des réflectances au sol (corrigées des effets de l'atmosphère, au moins leur partie prédictive - correction Rayleigh) ou en sommet d'atmosphère (« Top of Atmosphère » dans la littérature anglo-saxonne). A cet effet, le procédé 50 d'augmentation de résolution spatiale peut comporter, dans des modes préférés de mise en oeuvre, une étape préalable (non représentée sur les figures) de conversion des valeurs des pixels de l'image MS et de l'image PAN en valeurs de réflectance MS et de réflectance PAN au sol ou en sommet d'atmosphère, si cette conversion n'a pas déjà été effectuée par d'autres moyens. Une telle conversion est considérée comme connue de l'homme de l'art.

La figure 2 représente schématiquement les principales étapes d'un procédé 50 d'augmentation de résolution spatiale de l'image MS à partir de l'image PAN. Tel qu'illustré par la figure 2, le procédé 50 d'augmentation de résolution spatiale comporte, pour augmenter la résolution spatiale dans une portion prédéterminée de la scène observée, des étapes de :

- 51 détermination de valeurs de paramètres d'un modèle de scène permettant de paramétrer de manière optimale ledit modèle de scène par rapport à la réflectance MS de l'image MS dans la portion de scène considérée, dites « valeurs optimales MS »,
- 52 détermination d'un gradient des valeurs des paramètres permettant d'optimiser le paramétrage du modèle de scène par rapport à une réflectance PAN déterminée en fonction du modèle de scène et des valeurs optimales MS, dit « gradient d'optimisation »,
- 53 détermination d'un vecteur d'injection représentatif de la variation de réflectance MS associée à la variation de réflectance PAN pour la portion de scène considérée, en fonction du modèle de scène et du gradient d'optimisation,

Les étapes ci-dessus (51 détermination de valeurs optimales MS, 52 détermination de gradient d'optimisation et 53 détermination de vecteur d'injection) sont exécutées pour une portion de la scène, et sont répétées pour chaque portion de scène si la résolution spatiale de l'image MS doit être augmentée dans plusieurs portions de scène observée.

Suivant un premier exemple, la portion de scène correspond à un pixel en haute résolution spatiale (c'est-à-dire à la résolution spatiale de l'image PAN), de sorte que les étapes ci-dessus sont exécutées pour chaque pixel en haute résolution spatiale considéré. En d'autres termes, dans un tel cas, un vecteur d'injection est calculé pour chaque pixel en haute résolution spatiale considéré, et de préférence pour tous les pixels en haute résolution spatiale de l'image PAN. Alternativement, la portion de scène peut correspondre à un pixel en basse résolution spatiale (c'est-à-dire à la résolution spatiale de l'image MS), de sorte que les étapes ci-dessus sont exécutées pour chaque pixel en basse résolution spatiale considéré. En d'autres termes, dans un tel cas, un vecteur d'injection est calculé pour chaque pixel en basse résolution spatiale considéré, et de préférence pour tous les pixels en basse résolution spatiale de l'image MS, et un vecteur d'injection pour chaque pixel en haute résolution spatiale peut être obtenu en sur-échantillonnant les vecteurs d'injection obtenus pour les pixels en basse résolution spatiale.

Suivant un second exemple, la portion de scène correspond à un groupe de pixels en haute résolution spatiale (c'est-à-dire à la résolution spatiale de l'image PAN), de sorte que les étapes ci-dessus sont exécutées pour chaque groupe de pixels en haute résolution spatiale considéré. En d'autres termes, dans un tel cas, un vecteur d'injection est calculé pour chaque groupe de pixels en haute résolution spatiale considéré, et de préférence de sorte à couvrir tous les pixels en haute résolution spatiale de l'image PAN. Alternativement, la portion de scène peut correspondre à groupe de pixels en basse résolution spatiale (c'est-à-dire à la résolution spatiale de l'image MS), de sorte que les étapes ci-dessus sont exécutées pour chaque groupe de pixels en basse résolution spatiale considéré. En d'autres termes, dans un tel cas, un vecteur d'injection est calculé pour chaque groupe de pixels en basse résolution spatiale considéré, et de préférence de sorte à couvrir tous les pixels en basse résolution spatiale de l'image MS, et un vecteur d'injection pour chaque pixel en haute résolution spatiale peut être obtenu en sur-échantillonnant les vecteurs d'injection obtenus pour les pixels en basse résolution spatiale.

Le procédé 50 d'augmentation de résolution spatiale de l'image MS comporte en outre une étape 54 de calcul d'une image MS à résolution spatiale augmentée en fonction de l'image MS, de l'image PAN et du ou des vecteurs d'injection.

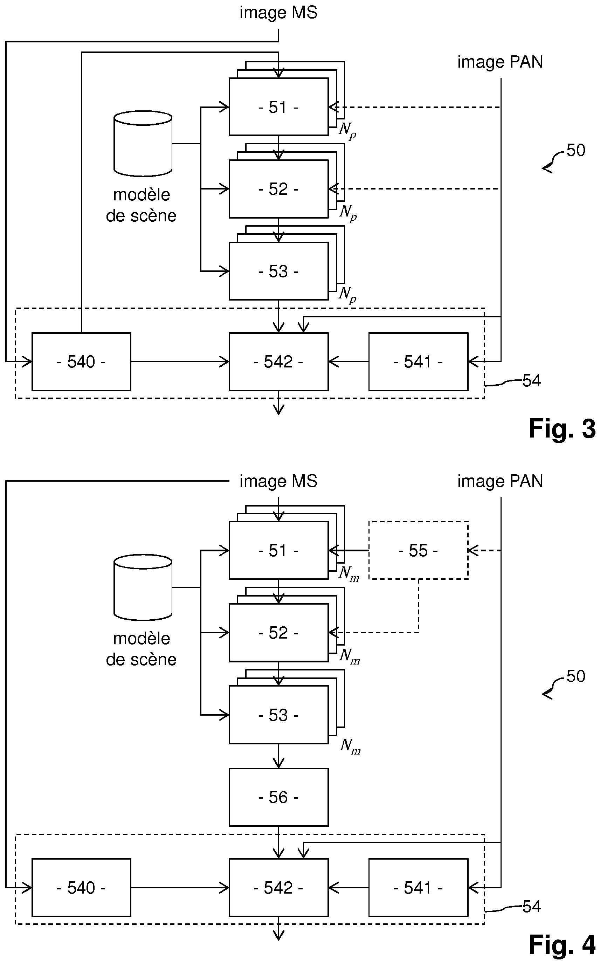

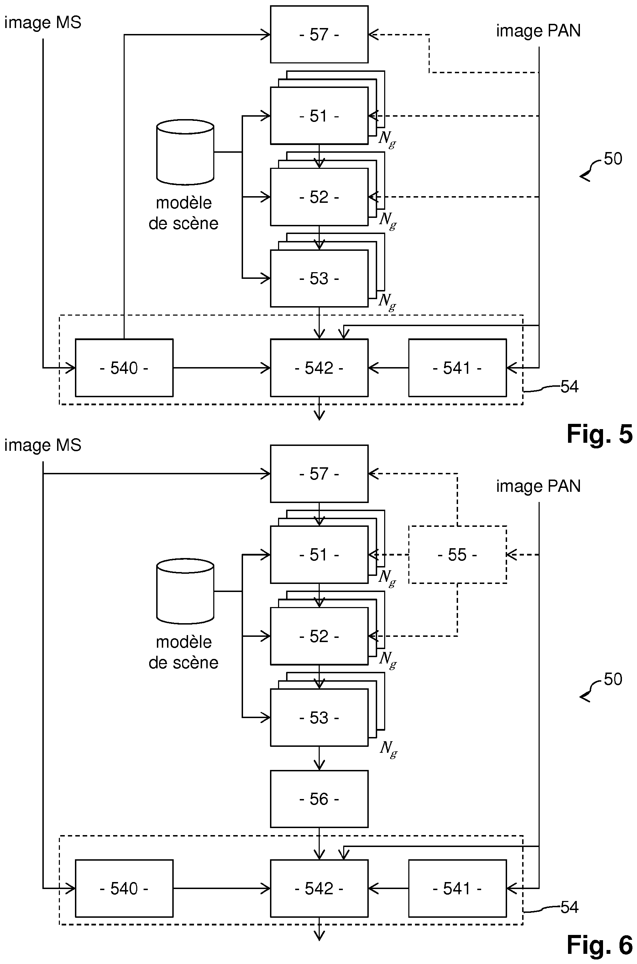

Tel qu'indiqué ci-dessus, le procédé 50 d'augmentation de résolution spatiale utilise un modèle de scène, et des exemples possibles de modèles de scène sont décrits plus en détail ci-après. En outre, des exemples de mise en oeuvre détaillés des étapes illustrées par la figure 2 sont décrits plus en détail ci-après, en considérant dans un premier temps un exemple dans lequel la portion de scène correspond à un pixel en haute résolution spatiale (figure 3) puis, dans un second temps, des exemples dans lesquels la portion de scène correspond à un pixel en basse résolution spatiale (figure 4) ou à des groupes de pixels en haute résolution spatiale (figure 5) ou à des groupes de pixels en basse résolution spatiale (figure 6).

## A) Modèle de scène

Tel qu'indiqué ci-dessus, la procédé 50 d'augmentation de résolution spatiale utilise un modèle de scène. De tels modèles de scène sont considérés comme connus de l'homme de l'art, et le choix d'un modèle de scène particulier constitue une variante d'implémentation.

Le modèle de scène comporte avantageusement au moins un modèle de réflectance au sol qui modélise la réflectance intrinsèque de la scène observée. Dans des modes préférés de mise en oeuvre, le modèle de scène comporte en outre un modèle atmosphérique qui modélise la fonction de transfert de l'atmosphère entre la scène et le satellite 10, et plus particulièrement entre la scène et le sommet de l'atmosphère.

Le lecteur pourra par exemple se référer au document WO 2018/210647 (inventeur Hervé Poilvé), qui décrit divers types de modèles de réflectance au sol et de modèles atmosphériques paramétrés.

Dans la suite de la description, on se place de manière non limitative dans le cas où le modèle de scène comporte à la fois un modèle de réflectance au sol et un modèle atmosphérique.

### A.1) Modèle de réflectance au sol

Le modèle de réflectance au sol est par exemple basé sur un modèle SAIL/PROSPECT, qui modélise notamment la réflectance de scènes correspondant à des couverts de végétation, la végétation étant le contributeur principal dans la majorité des scènes observées depuis un satellite 10.

Le modèle SAIL/PROSPECT, également connu sous le nom de modèle PROSAIL dans la littérature scientifique, prend en compte, de manière conventionnelle, la direction d'illumination de la scène par le Soleil ainsi que la direction de visée de l'instrument d'observation optique (modèle BRDF pour « Bidirectional Réflectance Distribution Function »).

Le modèle SAIUPROSPECT a été validé de manière exhaustive et est couramment utilisé par la communauté scientifique. On peut citer à titre d'exemple la publication scientifique : « PROSPECT + SAIL Models : A Review of Use for Végétation Characterization », Jacquemoud S., Verhoef W., Baret W., Bacour C., Zarco-Tejada P.J., Asner G.P., François C., Ustin, S.L., Remote Sensing of Environment 113, S56-S66.

Il est également possible d'enrichir le modèle de réflectance au sol au moyen par exemple :

- d'une connaissance a priori du couvert observé et d'une gamme prédéterminée de densité de végétation (allant par exemple de forêt tropicale à région semi-aride),
- d'une composante d'eau, qui met par exemple en oeuvre un modèle de transfert radiatif utilisant le même formalisme que le modèle SAIL et les propriétés optiques de l'eau telles que caractérisées dans des eaux potentiellement peu profondes et turbides, dites de type CASE II (voir par exemple « Variations in the Light Absorption Coefficients of Phytoplankton, Nonalgal Particles, and Dissolved Organic Matter in Coastal Waters Around Europe », Babin et al., Journal of Geophysical Research, 108, 3211) s'il est connu a priori qu'une forte présence d'eau est possible dans la scène observée (par exemple zone côtière, lacs, etc.),
- d'une réponse spectrale du sol prédéterminée, sélectionnée en fonction d'une connaissance a priori du type sol observé dans la scène lorsque la contribution du sol est susceptible d'être importante par rapport à la contribution du couvert végétal (montagne, désert, etc.),
- d'une modélisation d'autres caractéristiques susceptibles d'influencer la réflectance de la scène observée, comme par exemple une présence importante de zones brulées, de zones enneigées, de surfaces artificielles présentant une signature spectrale prédéterminée, etc.

A.2) Modèle atmosphérique

Le cas échéant, le modèle atmosphérique comporte par exemple un modèle de type LOWTRAN (voir par exemple « Users Guide to LOWTRAN 7 », Kneisys F.X. et al., 1988, Air Force Geophysics Lab Hanscom AFB MA) et, de préférence, un modèle de nuages.

Pour un modèle de type LOWTRAN, le paramètre directeur est généralement la distance de visibilité, en relation avec la charge d'aérosols. Les propriétés optiques des aérosols peuvent être déduites de l'appel du modèle LOWTRAN, par comparaison des résultats fournis par ledit modèle LOWTRAN en considérant d'une part une absence d'aérosols (visibilité maximale) et, d'autre part, un type particulier d'aérosols et une valeur de référence de la distance de visibilité. Ainsi, il est possible d'établir des relations (« look-up tables ») entre le paramètre distance de visibilité du modèle LOWTRAN et l'épaisseur optique de la couche aérosols, et d'utiliser ladite distance de visibilité comme paramètre dudit modèle d'aérosols.

Le modèle de nuages est par exemple modélisé en tant que couche de milieu trouble (« turbid medium » dans la littérature anglo-saxonne) avec une fonction de phase Henyey-Greenstein et un paramètre d'asymétrie adaptés aux comportements respectifs des aérosols et des nuages. Pour le modèle de nuages, les fonctions de transfert sont par exemple exprimées selon le formalisme 4-flux tel que développé dans le modèle SAIL.

Les propriétés optiques de nuages sont bien connues et décrites dans la littérature, et peuvent être utilisées pour paramétrer le modèle de nuages, et pour établir une relation entre l'épaisseur optique d'un nuage et la réflectance apparente dudit nuage, par exemple pour utiliser l'épaisseur optique de nuage comme paramètre du modèle de nuages.

A.3) Sélection du modèle de scène

Afin de pouvoir traiter des images de scènes situées à des endroits différents à la surface de la Terre, il est possible, dans des modes particuliers de mise en oeuvre, de mémoriser dans une base de données une bibliothèque de modèles de scène. Chaque modèle de scène mémorisé dans cette base de données correspond à une combinaison particulière d'un modèle de réflectance au sol et d'un modèle atmosphérique adaptée à une combinaison particulière de type de paysage et de conditions climatiques.

En classifiant différentes zones à la surface de la Terre en fonction de leurs types de paysage et de leurs conditions climatiques, il est possible d'établir une ou plusieurs cartes géographiques permettant de sélectionner, pour chaque zone à la surface de la Terre, le modèle de scène le plus adapté au type de paysage et aux conditions climatiques rencontrés dans cette zone.

Ainsi, la sélection revient principalement, dans le cas où une bibliothèque globale de modèles de scène a préalablement été constituée dans une base de données, à identifier la zone dans laquelle se trouve la scène observée et à obtenir dans la base de données le modèle de scène associé à ladite zone.

Le modèle de scène considéré est ainsi piloté par un ensemble de paramètres $v = (v_k)$, $k = 1 ... N_k$ qui décrivent à la fois la nature des éléments présents dans la portion de scène considérée et ses conditions atmosphériques. En outre, il est à noter que le modèle de scène considéré peut optionnellement varier d'une portion de scène à une autre dans le cas de portions de scène de natures très différentes.

Le modèle de scène couvre de préférence l'ensemble du domaine optique, de 0.4 micromètres à 2.5 micromètres, avec une résolution spectrale fine, de l'ordre de quelques nanomètres à quelques dizaines de nanomètres. Ceci permet ensuite de simuler la réflectance de la scène à la fois dans les bandes de longueurs d'ondes de l'image MS (ci-après « bandes MS ») et dans la bande de longueurs d'ondes de l'image PAN (ci-après « bande PAN »), en fonction de leurs réponses spectrales respectives. Ainsi pour un jeu de paramètres $v$, on désigne ci-après par $\rho_{model\text{-}MS}(v)$ et $\rho_{model\text{-}PAN}(v)$ les réflectances simulées fournies par le modèle de scène dans respectivement les bandes MS et dans la bande PAN.

B) Exemple de mise en oeuvre sur des pixels en haute résolution spatiale

La figure 3 représente schématiquement les principales étapes d'un mode particulier de mise en oeuvre dans lequel la portion de scène considérée correspond à un pixel en haute résolution spatiale (c'est-à-dire à la résolution spatiale de l'image PAN), et dans lequel la résolution spatiale doit être augmentée dans toute la scène, c'est-à-dire qu'un vecteur d'injection est calculé pour chaque pixel en haute résolution spatiale de l'image PAN.

Tel qu'illustré par la figure 3, l'étape 54 de calcul de l'image MS à résolution spatiale augmentée comporte, dans cet exemple de mise en oeuvre :

- une étape 540 de sur-échantillonnage spatial de l'image MS de sorte à obtenir l'image MS à pas d'échantillonnage spatial plus petit que le pas d'échantillonnage spatial initial, dite « image MS sur-échantillonnée », de préférence avec un pas d'échantillonnage spatial égal au pas d'échantillonnage spatial de l'image PAN,

**-** une étape 541 de filtrage passe-bas de l'image PAN de sorte à obtenir une image PAN à résolution spatiale diminuée en conservant son pas d'échantillonnage spatial initial,

L'étape 54 de calcul de l'image MS à résolution spatiale augmentée comporte en outre une étape 542 de correction de l'image MS sur-échantillonnée qui est exécutée pour chaque portion de scène considérée, c'est-à-dire dans le présent exemple pour chaque pixel de l'image MS sur-échantillonnée. La correction de l'image MS sur-échantillonnée en un pixel donné (portion de scène) est effectuée en fonction du vecteur d'injection calculé pour ledit pixel, et des réflectances PAN respectives de l'image PAN et de l'image PAN à résolution spatiale diminuée pour ledit pixel.

B.1) Sur-échantillonnage spatial de l'image MS

Dans l'exemple illustré par la figure 3, l'étape 540 de sur-échantillonnage spatial de l'image MS est exécutée avant l'étape 51 de détermination de valeurs optimales MS. De manière générale, toute méthode de sur-échantillonnage spatial d'une image connue de l'homme de l'art peut être mise en oeuvre, et le choix d'une méthode particulière ne constitue qu'une variante d'implémentation. Par exemple le sur-échantillonnage spatial peut être réalisé par une interpolation bilinéaire de l'image MS.
A l'issue de l'étape 540 de sur-échantillonnage spatial, le nombre de pixels de l'image MS a été augmenté de sorte qu'un pixel de l'image MS sur-échantillonnée représente sensiblement la même surface de la scène qu'un pixel de l'image PAN. La résolution spatiale de l'image MS sur-échantillonnée, bien qu'ayant le même pas d'échantillonnage spatial que celui de l'image PAN, n'est pas comparable à celle de l'image PAN, et est toujours limitée par la résolution spatiale d'acquisition initiale de l'image MS. Les étapes suivantes du procédé 50 d'augmentation de résolution spatiale visent précisément à corriger, en fonction de l'image PAN, l'image MS sur-échantillonnée pour obtenir une image MS à résolution spatiale augmentée plus proche de ce qu'aurait été une image MS acquise directement avec la même résolution spatiale que l'image PAN.

B.2) Détermination des valeurs optimales MS

Tel qu'illustré par la figure 3, le procédé 50 d'augmentation de résolution spatiale comporte une étape 51 de détermination de valeurs des paramètres du modèle de scène permettant d'optimiser le paramétrage dudit modèle de scène par rapport à l'image MS sur-échantillonnée, dites « valeurs optimales MS ». Cette étape 51 de détermination de valeurs optimales MS vise à inverser le modèle de scène et est exécutée, dans l'exemple illustré par la figure 3, en chaque pixel de l'image MS sur-échantillonnée.
Il est à noter que, au cours de l'étape 51 de détermination de valeurs optimales MS, le paramétrage du modèle de scène est optimisé au moins par rapport à l'image MS sur-échantillonnée. Il est cependant possible, suivant d'autres exemples, de considérer également l'image PAN. En d'autres termes, il est possible d'optimiser le paramétrage du modèle de scène par rapport à la fois à la réflectance MS de l'image MS sur-échantillonnée et à la réflectance PAN de l'image PAN.
Dans la suite de la description, on se place de manière non limitative dans le cas où seule l'image MS sur-échantillonnée est prise en compte pour la détermination des valeurs optimales MS.
Tel qu'indiqué ci-dessus, un jeu particulier de valeurs des paramètres du modèle de scène permet de calculer, en chaque pixel considéré, une réflectance MS simulée, qui peut être comparée à la réflectance MS de l'image MS sur-échantillonnée.
Par exemple, l'optimisation vise à maximiser la ressemblance entre la réflectance MS simulée, fournie par le modèle de scène, et la réflectance MS de l'image MS sur-échantillonnée, c'est-à-dire qu'elle vise à déterminer les valeurs dites optimales desdits paramètres qui permettent d'obtenir une ressemblance maximale, pour le pixel considéré, entre la réflectance MS simulée et la réflectance MS de l'image MS sur-échantillonnée. Toutefois, d'autres types d'optimisation peuvent être considérés et un processus d'optimisation comporte généralement la définition préalable d'une fonction de coût à optimiser, c'est-à-dire à minimiser ou à maximiser suivant le type de fonction de coût. Le choix d'une fonction de coût particulière ne constitue qu'une variante d'implémentation.
Tel qu'indiqué ci-dessus, la fonction de coût comporte de préférence un premier terme, dit « fonction de réflectance », qui calcule une ressemblance, pour le pixel considéré, entre la réflectance MS simulée et la réflectance MS de l'image MS sur-échantillonnée.
Dans des modes particuliers de mise en oeuvre, la fonction de coût peut comporter en outre un second terme, dit « fonction de connaissance a priori », qui calcule une ressemblance, pour le pixel considéré, entre les valeurs de paramètres considérées et une connaissance a priori sur les paramètres du modèle de scène. De telles dispositions permettent d'améliorer la détermination des valeurs optimales MS, en utilisant toute connaissance a priori de la distribution statistique des paramètres du modèle de scène.
La fonction de coût C utilisée pour déterminer les valeurs optimales MS du modèle de scène peut être exprimée sous la forme suivante :

$$C\big(v, \rho_{MS(p)}\big) = C_1\big(\rho_{model-MS(p)}(v), \rho_{MS(p)}\big) + C_2\big(v, v_{prior}\big)$$

expression dans laquelle :

- $C_1$ correspond à la fonction de réflectance,
- $C_2$ correspond à la fonction de connaissance a priori, optionnelle,
- $\rho_{MS(p)}$ correspond à la réflectance MS pour le pixel $p$ considéré, fournie par l'image MS sur-échantillonnée,
- $\rho_{model-MS(p)}(v)$ correspond à la réflectance MS simulée pour le pixel $p$ considéré, fournie par le modèle de scène pour les valeurs de paramètres v,
- $v_{prior}$ correspond à la connaissance a priori sur les paramètres du modèle de scène.

Suivant un premier exemple, la ressemblance calculée par la fonction de réflectance $C_1$ correspond à un écart quadratique qui peut être exprimé sous la forme suivante :

$$C_1\big(\rho_{model-MS(p)}(v), \rho_{MS(p)}\big) = \frac{1}{N_j} \sum_{j=1}^{N_j} \big(\rho_{model-MS,j(p)}(v) - \rho_{MS,j(p)}\big)^2$$

expression dans laquelle :

- $\rho_{MS,j(p)}$ correspond à la réflectance MS pour le pixel $p$ considéré, fournie par l'image MS sur-échantillonnée pour la j-ième bande de longueurs d'ondes parmi les $N_j$ bandes de longueurs d'ondes des bandes MS (si $N_j = 4$, les quatre bandes de longueurs d'ondes sont par exemple aux bandes R, G, B et NIR),
- $\rho_{model-MS,j(p)}(v)$ correspond à la réflectance MS simulée pour le pixel $p$ considéré, fournie par le modèle de scène pour les valeurs de paramètres v et pour la j-ième bande de longueurs d'ondes parmi les $N_j$ bandes de longueurs d'ondes des bandes MS.

Suivant un second exemple, la ressemblance calculée par la fonction de réflectance $C_1$ correspond à un écart quadratique normalisé qui peut être exprimé sous la forme suivante :

$$C_1\big(\rho_{model-MS(p)}(v), \rho_{MS(p)}\big) = \frac{1}{N_j} \sum_{j=1}^{N_j} \frac{\big(\rho_{model-MS,j(p)}(v) - \rho_{MS,j(p)}\big)^2}{E\left(\big(\rho_{model-MS,j} - \rho_{MS,j}\big)^2\right)}$$

expression dans laquelle $E((\rho_{model-MS,j} - \rho_{MS,j})^2)$ est une estimation du niveau de précision que l'on peut viser dans l'ajustement entre le modèle de scène et l'image MS sur-échantillonnée. Ce niveau de précision que l'on peut viser est par exemple estimé en prenant en compte le bruit radiométrique, la précision de la calibration radiométrique, etc. Il est également possible de prendre en compte un niveau de précision intrinsèque du modèle de scène, qui peut être une valeur forfaitaire prédéterminée.

Il est à noter que, dans le cas où l'image PAN est également utilisée pour déterminer les valeurs optimales MS, alors la réflectance PAN de celle-ci peut être incluse dans les expressions ci-dessus de la fonction de réflectance $C_1$ en considérant que l'on dispose de $(N_j + 1)$ bandes de longueurs d'ondes différentes, et que la réflectance PAN $\rho_{PAN(p)}$ de l'image PAN correspond à la réflectance mesurée dans la $(N_j + 1)$-ième bande de longueurs d'ondes, qui est comparée à la réflectance PAN simulée $\rho_{model-PAN(p)}(v)$ pour le pixel $p$ considéré, fournie par le modèle de scène pour les valeurs de paramètres v considérées.

La fonction de connaissance a priori $C_2$, optionnelle, peut par exemple être exprimée sous la forme suivante :

$$C_2\big(v, v_{prior}\big) = \frac{1}{N_k} \sum_{k=1}^{N_k} \left(\frac{v_k - E(v_k)}{\sigma(v_k)}\right)^2$$

expression dans laquelle $E(v_k)$ et $\sigma(v_k)$ correspondent à la connaissance a priori $v_{prior}$ et correspondent respectivement à la moyenne et à l'écart-type du paramètre $v_k$ ($1 \le k \le N_k$), par exemple supposé comme étant une variable aléatoire suivant une loi gaussienne.

Dans le cas d'une fonction de coût C telle que décrite ci-dessus, l'optimisation correspond à une minimisation de ladite fonction de coût, et les valeurs optimales MS $\hat{v}_{MS}$ pour le pixel considéré sont celles permettant de minimiser ladite fonction de coût :

$$\hat{v}_{MS(p)} = \underset{v}{\mathrm{argmin}}\left(C\left(v, \rho_{MS(p)}\right)\right)$$

De manière générale, toute méthode d'optimisation peut être mise en oeuvre, et le choix d'une méthode particulière ne constitue qu'une variante d'implémentation. Dans des modes préférés de mise en oeuvre, l'optimisation est réalisée en utilisant un algorithme de Gauss-Newton.

B.3) Détermination du gradient d'optimisation

Tel qu'illustré par la figure 3, le procédé 50 d'augmentation de résolution spatiale comporte une étape 52 détermination d'un gradient des valeurs des paramètres permettant d'optimiser le paramétrage du modèle de scène par rapport à une réflectance PAN simulée déterminée en fonction du modèle de scène et des valeurs optimales MS, dit « gradient d'optimisation ».

Le gradient d'optimisation est représentatif, au voisinage de la réflectance PAN simulée fournie par le modèle de scène pour les valeurs optimales MS, de la variation des valeurs des paramètres par rapport à la variation de réflectance PAN, pour une fonction de coût prédéterminée et pour le pixel en haute résolution spatiale considéré. Cette étape 52 de détermination de gradient d'optimisation est exécutée, dans l'exemple illustré par la figure 3, en chaque pixel en haute résolution spatiale.

De manière générale, toute fonction de coût peut être mise en oeuvre et le choix d'une fonction de coût ne constitue qu'une variante d'implémentation.

Tout ce qui a été décrit précédemment à la section B.2 concernant la fonction de coût utilisée pour déterminer les valeurs optimales MS est applicable également pour la fonction de coût à utiliser pour déterminer le gradient d'optimisation, à l'exception notable que seule la bande PAN est prise en compte pour déterminer le gradient d'optimisation (les bandes MS ne sont pas prises en compte pour déterminer le gradient d'optimisation).

Tel qu'indiqué ci-dessus, la fonction de coût comporte de préférence une fonction de réflectance qui calcule une ressemblance entre des réflectances PAN. Pour déterminer le gradient d'optimisation, une réflectance PAN simulée, fournie par le modèle de scène pour les valeurs de paramètres considérées, est comparée à une réflectance PAN simulée déterminée en fonction du modèle de scène et des valeurs optimales MS.

Dans des modes particuliers de mise en oeuvre, la fonction de coût peut comporter en outre une fonction de connaissance a priori qui calcule une ressemblance, pour le pixel considéré, entre les valeurs de paramètres considérées et une connaissance a priori sur les paramètres du modèle de scène.

En désignant par $\hat{\rho}_{PAN(p)} = \rho_{model\text{-}PAN(p)}(\hat{v}_{MS(p)})$ la réflectance PAN simulée fournie par le modèle de scène pour les valeurs optimales MS, et par $\delta\rho_{PAN}$ un écart prédéterminé pour la réflectance PAN, la fonction de coût C' utilisée pour déterminer le gradient d'optimisation peut être exprimée sous la forme suivante :

$$C'\left(v, \hat{\rho}_{PAN(p)} + \delta\rho_{PAN}\right) = C'_1\left(\rho_{model-PAN(p)}(v), \hat{\rho}_{PAN(p)} + \delta\rho_{PAN}\right) + C'_2\left(v, v_{prior}\right)$$

expression dans laquelle :

- $C'_1$ correspond à la fonction de réflectance,
- $C'_2$ correspond à la fonction de connaissance a priori, optionnelle,
- $\rho_{model\text{-}PAN(p)}(v)$ correspond à la réflectance PAN simulée pour le pixel $p$ considéré, fournie par le modèle de scène pour les valeurs de paramètres v.

Suivant un premier exemple, la fonction de réflectance $C'_1$ peut être exprimée sous la forme suivante :

$$C'_1\left(\rho_{model-PAN(p)}(v), \hat{\rho}_{PAN(p)} + \delta\rho_{PAN}\right)$$
$$= \left(\rho_{model-PAN(p)}(v) - \left(\hat{\rho}_{PAN(p)} + \delta\rho_{PAN}\right)\right)^2$$

Suivant un second exemple, la fonction de réflectance $C'_1$ peut être exprimée sous la forme suivante :

$$C'_1\left(\rho_{model-PAN(p)}(v), \hat{\rho}_{PAN(p)} + \delta\rho_{PAN}\right)$$

$$= \frac{\left(\rho_{model-PAN(p)}(v) - \left(\hat{\rho}_{PAN(p)} + \delta\rho_{PAN}\right)\right)^2}{E\left(\left(\rho_{model-PAN} - \left(\hat{\rho}_{PAN} + \delta\rho_{PAN}\right)\right)^2\right)}$$

expression dans laquelle $E\left((\rho_{model-PAN} - (\hat{\rho}_{PAN} + \delta\rho_{PAN}))^2\right)$ est une estimation du niveau de précision que l'on peut viser dans l'ajustement entre le modèle de scène et la réflectance PAN simulée fournie par le modèle de scène pour les valeurs optimales MS, qui peut être estimée comme décrit précédemment en référence à l'étape 51 de détermination des valeurs optimales MS.

La fonction de connaissance a priori $C'_2$, optionnelle, peut par exemple être exprimée comme précédemment sous la forme suivante :

$$C'_2\left(v, v_{prior}\right) = \frac{1}{N_k} \sum_{k=1}^{N_k} \left(\frac{v_k - E(v_k)}{\sigma(v_k)}\right)^2$$

Dans des modes préférés de mise en oeuvre, la connaissance a priori sur les paramètres du modèle de scène, utilisée au cours de l'étape 52 de détermination du gradient d'optimisation, est calculée en fonction des valeurs optimales MS. En d'autres termes, la valeur moyenne $E(v_k)$ et l'écart-type $\sigma(v_k)$ sont estimés en fonction des valeurs optimales MS. En désignant par $\hat{v}_{MS,k(p)}$ la valeur optimale MS pour le k-ième paramètre ($1 \leq k \leq N_k$) du modèle de scène, alors la valeur moyenne $E(v_k)$ et l'écart-type $\sigma(v_k)$ sont par exemple estimés comme suit pour le pixel considéré :

$$E(v_k) = \hat{v}_{MS,k(p)}$$

$$\sigma(v_k) \leq K_\sigma \sqrt{\frac{1}{N_p} \sum_{t=1}^{N_p} \left(\hat{v}_{MS,k(p)} - \hat{v}_{MS,k(t)}\right)^2}$$

expression dans laquelle :

- $N_p$ correspond au nombre de pixels de l'image MS sur-échantillonnée,
- $K_\sigma$ est un nombre réel prédéterminé, choisi par exemple dans l'intervalle [1, 5].

Le gradient d'optimisation est déterminé par optimisation de la fonction de coût, qui vise à inverser le modèle de scène, au voisinage de la réflectance PAN simulée fournie par le modèle de scène pour les valeurs optimales MS. Le gradient d'optimisation peut être déterminé selon toute méthode d'optimisation de fonction de coût connue de l'homme de l'art, et le choix d'une méthode particulière ne constitue d'une variante d'implémentation. Dans des modes préférés de mise en oeuvre, le gradient d'optimisation est déterminé en minimisant la fonction de coût en utilisant un algorithme de Gauss Newton.

Dans le cas d'une fonction de coût C' telle que décrite ci-dessus, l'optimisation correspond à une minimisation de ladite fonction de coût, et la détermination du gradient d'optimisation comporte par exemple la détermination de valeurs optimales PAN $\hat{v}_{PAN}$ selon l'expression suivante :

$$\hat{v}_{PAN(p,\delta\rho_{PAN})} = \underset{v}{\mathrm{argmin}} \left(C'\left(v, \hat{\rho}_{PAN(p)} + \delta\rho_{PAN}\right)\right)$$

Dans un tel cas, pour le pixel considéré, le gradient d'optimisation au voisinage de la réflectance PAN simulée fournie par le modèle de scène pour les valeurs optimales MS, désigné par $(\partial v/\partial\rho_{PAN})_{\rho=\hat{\rho}_{PAN(p)}}$, est par exemple déterminé selon l'expression suivante :

$$\left(\frac{\partial \hat{v}}{\partial \rho_{PAN}}\right)_{\rho=\widehat{\rho}_{PAN(p)}} = \frac{\left(\hat{v}_{PAN(p,\delta\rho_{PAN})} - \hat{v}_{MS(p)}\right)}{\delta\rho_{PAN}}$$

Un tel gradient d'optimisation est donc calculé, dans l'exemple considéré, en chaque pixel en haute résolution spatiale.

B.4) Détermination du vecteur d'injection

Tel qu'illustré par la figure 3, le procédé 50 d'augmentation de résolution spatiale comporte une étape 53 de détermination d'un vecteur d'injection représentatif de la variation de réflectance MS associée à la variation de réflectance PAN pour le pixel considéré, en fonction du modèle de scène et du gradient d'optimisation. Cette étape 53 de détermination de vecteur d'injection est exécutée, dans l'exemple illustré par la figure 3, en chaque pixel de l'image MS sur-échantillonnée.

Le vecteur d'injection pour un pixel est, dans des modes préférés de mise en oeuvre, calculé en fonction du gradient d'optimisation calculé pour ce pixel et en fonction d'une matrice de variation du modèle de scène. Cette matrice de variation correspond à la matrice jacobienne du modèle de scène au niveau des valeurs optimales MS calculées pour le pixel considéré, et est représentative de la variation de réflectance MS par rapport à la variation des valeurs des paramètres au voisinage des valeurs optimales MS. Une telle matrice de variation est fournie directement par le modèle de scène, ou peut être déterminée à partir du modèle de scène selon des méthodes connues.

Le vecteur d'injection pour un pixel $p$ est par exemple calculé selon l'expression suivante :

$$\left(\frac{\partial \rho_{MS}}{\partial \rho_{PAN}}\right)_{\rho=\rho_{MS(p)}} = \left(\frac{\partial \rho_{model-MS}}{\partial v}\right)_{v=\hat{v}_{MS(p)}} \circ \left(\frac{\partial \hat{v}}{\partial \rho_{PAN}}\right)_{\rho=\widehat{\rho}_{PAN(p)}}$$

expression dans laquelle :

- $(\partial\rho_{MS}/\partial\rho_{PAN})_{\rho=MS(p)}$ correspond au vecteur d'injection calculé pour le pixel $p$ considéré, de dimensions $(N_j \times 1)$,
- $(\partial\rho_{model-MS}/\partial v)_{v=\hat{v}MS(p)}$ correspond à la matrice de variation du modèle de scène au voisinage des valeurs optimales MS $\hat{v}_{MS(p)}$ pour le pixel $p$ considéré, de dimensions $(N_j \times N_k)$,
- $(\partial\hat{v}/\partial\rho_{PAN})_{\rho=\widehat{\rho}Pan(p)}$ correspond au gradient d'optimisation calculé pour le pixel $p$ considéré, de dimensions $(N_k \times 1)$,
- $A \circ B$ correspond au produit matriciel des matrices A et B.

B.5, Filtrage passe-bas de l'image PAN

Tel qu'illustré par la figure 3, le procédé 50 d'augmentation de résolution spatiale comporte une étape 541 de filtrage passe-bas de l'image PAN, de sorte à obtenir une image PAN à résolution spatiale diminuée.

Le filtrage passe-bas de l'image PAN permet d'obtenir une image PAN à résolution spatiale diminuée, c'est-à-dire une estimation de ce qu'aurait été l'image PAN si elle avait été acquise avec la même résolution spatiale que l'image MS, puis sur-échantillonnée. Ainsi, l'image PAN à résolution spatiale diminuée et l'image MS sur-échantillonnée ont sensiblement la même résolution spatiale.

Le filtrage passe-bas est donc un filtrage spatial de l'image PAN. De préférence, le filtre passe-bas utilisé est un filtre de convolution gaussien représentatif de la résolution spatiale effective des bandes MS, selon la Fonction de Transfert de Modulation ou FTM (« Modulation Transfert Function » ou MTF) de l'instrument d'observation 11 optique dans les bandes MS.

B.6) Correction de l'image MS sur-échantillonnée

Tel qu'illustré par la figure 3, le procédé 50 d'augmentation de résolution spatiale comporte une étape 542 de correction de l'image MS sur-échantillonnée en fonction des vecteurs d'injection calculés pour chaque pixel, et en fonction de l'image PAN et de l'image PAN à résolution spatiale diminuée. L'étape 542 de correction permet d'obtenir l'image MS à résolution spatiale augmentée.

L'étape 542 de correction vise à répercuter dans l'image MS sur-échantillonnée des modulations haute résolution spatiale observées dans la bande PAN avec l'image PAN. A cet effet, l'étape 542 de correction comporte par exemple une estimation de la modulation haute résolution spatiale de la réflectance PAN, puis une conversion de la modulation haute résolution spatiale de la réflectance PAN en modulation haute résolution spatiale de la réflectance MS. La modulation haute résolution spatiale de la réflectance MS peut alors être ajoutée à l'image MS sur-échantillonnée pour obtenir l'image MS à résolution spatiale augmentée à la même résolution spatiale que l'image PAN, conforme à la réalité de la mesure et donc proche de ce qu'elle aurait été si elle avait été acquise directement à la résolution spatiale de l'image PAN.

La modulation haute résolution spatiale de la réflectance PAN est par exemple estimée en comparant l'image PAN avec l'image PAN à résolution spatiale diminuée. En désignant par $\rho_{PAN(p)}$ la réflectance PAN du pixel $p$ de l'image PAN, et par $\rho_{PAN-low(p)}$ la réflectance PAN du pixel $p$ de l'image PAN à résolution spatiale diminuée, alors la modulation haute résolution spatiale $mod_{PAN}(p)$ de la réflectance PAN pour le pixel $p$ est par exemple calculée selon l'expression suivante :

$$mod_{PAN}(p) = \rho_{PAN(p)} - \rho_{PAN-low(p)}$$

La modulation haute résolution spatiale de la réflectance MS est par exemple estimée en fonction de la modulation haute résolution spatiale de la réflectance PAN et en fonction du vecteur d'injection. La modulation haute résolution spatiale $mod_{MS}(p)$ de la réflectance MS pour le pixel $p$ est par exemple calculée selon l'expression suivante :

$$mod_{MS}(p) = mod_{PAN}(p) \times \left(\frac{\partial \rho_{MS}}{\partial \rho_{PAN}}\right)_{\rho=\rho_{MS(p)}}$$

En désignant par $\rho_{MS-high(p)}$ la réflectance MS du pixel $p$ de l'image MS sur-échantillonnée, et par $\hat{\rho}_{MS-high(p)}$ la réflectance MS du pixel $p$ de l'image MS à résolution spatiale augmentée obtenue après correction de l'image MS sur-échantillonnée, la correction de l'image MS sur-échantillonnée est alors effectuée, en chaque pixel ($1 \leq p \leq N_p$), selon l'expression suivante :

$$\hat{\rho}_{MS-high(p)} = \rho_{MS-high(p)} + mod_{MS}(p)$$

C) Exemple de mise en oeuvre sur des pixels en basse résolution spatiale

La figure 4 représente schématiquement les principales étapes d'un mode particulier de mise en oeuvre dans lequel la portion de scène considérée correspond à un pixel en basse résolution spatiale (au pas d'échantillonnage de l'image MS), et dans lequel la résolution spatiale doit être augmentée dans toute la scène, c'est-à-dire qu'un vecteur d'injection doit être calculé in fine pour chaque pixel en haute résolution spatiale de l'image PAN.

Tel qu'illustré par la figure 4, le procédé 50 d'augmentation de résolution spatiale comporte une étape 55 de sous-échantillonnage spatial de l'image PAN afin d'obtenir une image PAN avec un pas d'échantillonnage plus grand, correspondant par exemple à celui de l'image MS, dite « image PAN sous-échantillonnée ». Un tel sous-échantillonnage spatial peut être réalisé selon toute méthode connue de l'homme de l'art, et le choix d'une méthode particulière ne constitue qu'une variante d'implémentation. De préférence, le sous-échantillonnage spatial comporte un filtrage passe-bas de l'image PAN conforme à ce qui a été décrit ci-avant en référence à la figure 3, pour l'étape 541 de filtrage passe-bas de l'image PAN.

L'étape 55 de sous-échantillonnage spatial de l'image PAN est optionnelle, et est présente, notamment, si la réflectance PAN de l'image PAN est utilisée pour optimiser le modèle de scène au cours de l'étape 51 de détermination des valeurs optimales MS.

Le procédé 50 d'augmentation de résolution spatiale comporte ensuite les étapes 51 de détermination des valeurs optimales MS, 52 de détermination du gradient d'optimisation et 53 de détermination du vecteur d'injection qui sont exécutées pour chaque pixel de l'image MS. Tout ce qui a été décrit précédemment dans les sections B.2, B.3 et B.4 est également applicable, la seule différence étant que les pixels considérés sont ici des pixels en basse résolution spatiale (au pas d'échantillonnage spatial de l'image MS). En désignant par $N_m$ le nombre de pixels de l'image MS ($N_m < N_p$), on calcule donc dans un premier temps $N_m$ vecteurs d'injection.

Chaque vecteur d'injection est constitué par $N_j$ coefficients d'injection associés respectivement aux différentes bandes de longueurs d'ondes des bandes MS (par exemple aux bandes R, G, B et NIR). Dans chaque bande de longueurs d'ondes des bandes MS, on dispose donc d'une image élémentaire d'injection dont les N. pixels correspondent aux $N_m$ coefficients d'injection calculés pour cette bande de longueurs d'ondes. Ces $N_j$ images élémentaires d'injection forment ensemble une image de vecteurs d'injection.

Tel qu'illustré par la figure 4, le procédé 50 d'augmentation de résolution spatiale comporte une étape 56 de sur-échantillonnage spatial de l'image de vecteurs d'injection, qui vise à obtenir un vecteur d'injection pour chaque pixel en haute résolution spatiale. L'étape 56 de sur-échantillonnage spatial de l'image de vecteurs d'injection peut mettre en oeuvre, par exemple, une interpolation bilinéaire.

Tel qu'illustré par la figure 4, le procédé 50 d'augmentation de résolution spatiale de l'image MS comporte également les étapes 540 de sur-échantillonnage spatial de l'image MS, 541 de filtrage passe-bas de l'image PAN et 542 de correction, qui sont identiques à celles décrites ci-avant en référence à la figure 3 (sections B.4, B.5 et B.6).

D) Exemple de mise en oeuvre sur des groupes de pixels en haute résolution spatiale

La figure 5 représente schématiquement les principales étapes d'un mode particulier de mise en oeuvre dans lequel la portion de scène considérée correspond à un groupe de pixels en haute résolution spatiale (c'est-à-dire à la résolution spatiale de l'image PAN), et dans lequel la résolution spatiale doit être augmentée dans toute la scène, c'est-à-dire qu'un vecteur d'injection est calculé pour chaque pixel en haute résolution spatiale de l'image PAN.

Le procédé 50 d'augmentation de résolution spatiale de la figure 5 reprend toutes les étapes décrites ci-avant en référence à la figure 3.

Tel qu'illustré par la figure 5, le procédé 50 d'augmentation de résolution spatiale comporte en outre une étape 57 de classification des pixels de l'image MS sur-échantillonnée. Une telle classification vise à regrouper les pixels dont les réflectances MS sont homogènes d'un point de vue comportement spectral.

De manière générale, tout critère de classification connu de l'homme de l'art peut être mis en oeuvre, et le choix d'un critère de classification particulier ne constitue qu'une variante d'implémentation.

Notamment, il est possible d'utiliser un critère de végétation de type NDVI (« Normalized Differential Végétation Index » dans la littérature anglo-saxonne) en calculant, en chaque pixel, l'indice NDVI selon l'expression $(\rho_{NIR} - \rho_R)/(\rho_{NIR} + \rho_R)$, expression dans laquelle $\rho_{NIR}$ et $\rho_R$ correspondent aux réflectances mesurées respectivement dans la bande NIR et la bande R.

Alternativement ou en complément, il est possible d'utiliser un critère de niveau moyen de brillance en calculant, en chaque pixel, l'expression $\sum_{j=1}^{N_j} \rho_{MS,j}/N_j$. Dans un tel cas, il est possible d'utiliser également la réflectance de l'image PAN pour la classification, en considérant que l'on dispose de $(N_j + 1)$ bandes de longueurs d'ondes différentes, et que la réflectance PAN $\rho_{PAN}$ de l'image PAN correspond à la réflectance mesurée dans la $(N_j + 1)$-ième bande de longueurs d'ondes.

Il est donc possible de regrouper entre eux les pixels qui présentent des indices NDVI proches et/ou qui présentent des niveaux moyens de brillance proches.

A l'issue de l'étape 57 de classification, on dispose donc d'un nombre $N_g$ de groupes de pixels ($N_g \geq 1$). De manière générale, on calcule alors un vecteur d'injection pour chaque groupe de pixels, et le vecteur d'injection calculé pour un groupe de pixels est utilisé pour tous les pixels de ce groupe de pixels. Par conséquent, les étapes 51 de détermination des valeurs optimales MS, 52 de détermination de gradient d'optimisation et 53 de détermination du vecteur d'injection ne sont plus exécutées pour chacun des $N_p$ pixels, mais pour chacun des $N_g$ groupes de pixels, ce qui permet en principe de réduire grandement la quantité de calculs à effectuer. Au cours de l'étape 51 de détermination des valeurs optimales MS pour un groupe de pixels, le paramétrage du modèle de scène est par exemple optimisé par rapport à une réflectance MS de référence, représentative des réflectances MS des différents pixels du groupe de pixels considéré. Par exemple, la réflectance MS de référence d'un groupe de pixels correspond à une valeur médiane ou à une valeur moyenne des réflectances MS du groupe de pixels considéré. Dans le cas où la bande PAN est également utilisée au cours de l'étape 51 de détermination des valeurs optimales MS, alors de la même façon il est possible de considérer une réflectance PAN de référence qui peut être une valeur médiane ou une valeur moyenne des réflectances PAN dudit groupe de pixels considéré.

Une fois qu'un vecteur d'injection a été déterminé pour chaque groupe de pixels, étant donné que le vecteur d'injection déterminé pour un groupe de pixels est utilisé pour tous les pixels de ce groupe de pixels, alors on dispose d'un vecteur d'injection pour chaque pixel de l'image MS sur-échantillonnée, à utiliser au cours de l'étape 542 de correction.

E) Exemple de mise en oeuvre sur des groupes de pixels en basse résolution spatiale

La figure 6 représente schématiquement les principales étapes d'un mode particulier de mise en oeuvre dans lequel la portion de scène considérée correspond à un groupe de pixels en basse résolution spatiale (c'est-à-dire à la résolution spatiale de l'image MS), et dans lequel la résolution spatiale doit être augmentée dans toute la scène, c'est-à-dire qu'un vecteur d'injection doit être in fine calculé pour chaque pixel en haute résolution spatiale de l'image PAN.

Le procédé 50 d'augmentation de résolution spatiale de la figure 6 reprend toutes les étapes décrites ci-avant en référence à la figure 4.

Tel qu'illustré par la figure 6, le procédé 50 d'augmentation de résolution spatiale comporte en outre une étape 57 de classification des pixels en basse résolution spatiale de l'image MS, qui est identique à l'étape 57 de classification décrite en référence à la figure 5 pour les pixels en haute résolution spatiale.

Tel qu'indiqué ci-dessus, l'étape 55 de sous-échantillonnage spatial de l'image PAN est optionnelle, et est présente, notamment, si la réflectance PAN de l'image PAN est utilisée pour optimiser le modèle de scène au cours de l'étape 51 de détermination des valeurs optimales MS, ou encore dans l'étape 57 de classification.

A l'issue de l'étape 57 de classification, on dispose donc d'un nombre $N_g$ de groupes de pixels ($N_g \geq 1$), qui peut varier d'une image à une autre, suivant la scène observée. Tout ce qui a été décrit précédemment en référence à la figure 5, concernant les étapes 51 de détermination des valeurs optimales MS, 52 de détermination du gradient d'optimisation et 53 de détermination du vecteur d'injection, est également applicable dans le cas présent. Une fois qu'un vecteur d'injection a été déterminé pour chaque groupe de pixels, étant donné que le vecteur d'injection déterminé pour un groupe de pixels est utilisé pour tous les pixels de ce groupe de pixels, alors on dispose d'un vecteur d'injection pour chaque pixel en basse résolution spatiale.

Ainsi, on dispose d'une image de vecteurs d'injection au pas d'échantillonnage spatial de l'image MS, qui est sur-échantillonnée au cours de l'étape 56 pour obtenir un vecteur d'injection pour chaque pixel de l'image MS sur-échantillonnée, à utiliser au cours de l'étape 542 de correction.

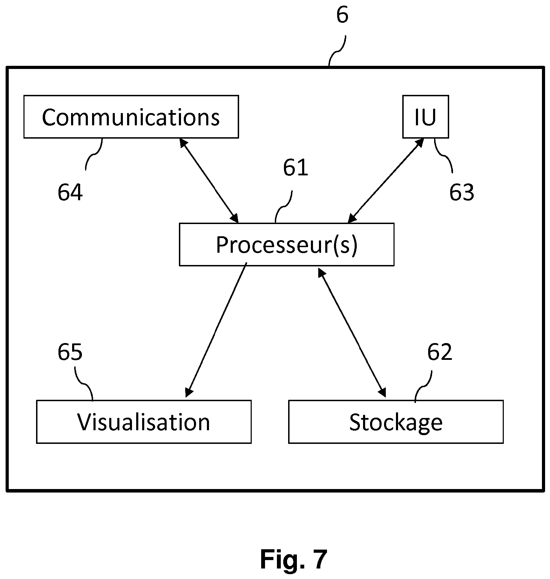

Dans un exemple de représentation d'un système de mise en oeuvre du procédé 50 (figure 7), un dispositif 6 comprend :

- une ou plusieurs unités de traitement constituées pour chacune d'elles d'un ou plusieurs processeurs 61, tels que par exemple des microprocesseurs, apte à exécuter les étapes du procédé 50 dans l'un au moins de ses modes d'exécution ;
- des ressources de stockage 62 tels qu'une ou plusieurs mémoires du type ROM (pour Read-Only Memory) ou RAM (pour Random Access Memory) ;
- une interface utilisateur 63, apte à permettre une entrée d'informations par un utilisateur, telles que par exemple la sélection des images MS et PAN à utiliser, des identifiants de méthodes de traitement et/ou des niveaux de précision requis, et une communication d'informations à l'utilisateur ;
- des moyens de communications 64 tels que par exemple un ou plusieurs récepteurs avec ou sans fil et/ou des connexions à un ou plusieurs réseaux, aptes à recevoir et/ou transmettre des données telles que par exemple concernant des images MS et/ou PAN ;
- des moyens de visualisation 65, aptes à afficher des images MS et/ou PAN, tels que par exemple un ou plusieurs écrans.

Dans des variantes de réalisation, une partie au moins des unités de traitement, des ressources de stockage et/ou des moyens de visualisation sont externalisés.

F) Autres variantes du procédé d'augmentation de résolution spatiale

De manière plus générale, il est à noter que les modes de mise en oeuvre considérés ci-dessus ont été décrits à titre d'exemples non limitatifs, et que d'autres variantes sont par conséquent envisageables.

Notamment, le procédé a été décrit en considérant que l'augmentation de résolution spatiale visait à obtenir une image MS à résolution spatiale augmentée à la même résolution spatiale que l'image PAN. Rien n'exclut, suivant d'autres exemples, de considérer pour l'image MS à résolution spatiale augmentée une résolution spatiale inférieure à celle de l'image PAN. Par exemple, dans le cas d'un instrument d'observation optique de type SPOT 6 / SPOT 7, la résolution spatiale de l'image MS est de l'ordre de 6 mètres, tandis que la résolution spatiale de l'image PAN est de l'ordre de 1.5 mètres. Dans un tel cas, il est également possible d'augmenter la résolution spatiale de l'image MS pour obtenir une résolution spatiale intermédiaire, par exemple de l'ordre de 2.5 mètres. Le cas échéant, il est par exemple possible, de manière nullement limitative, de sous-échantillonner préalablement l'image PAN pour obtenir une image PAN sous-échantillonnée, ramenée à la résolution spatiale souhaitée pour l'image MS, c'est-à-dire 2.5 mètres.

Le présent procédé 50 d'augmentation de résolution spatiale peut être exécuté de manière automatisée sans intervention d'un opérateur à quelque étape que ce soit. Le présent procédé 50 d'augmentation de résolution spatiale peut être mis en oeuvre de manière non limitative, en fonction du contexte opérationnel, au sein d'une station sol 20 de réception directe d'images satellites, au sein d'une suite logicielle autonome dédiée au traitement d'images satellites ou aériennes, ou encore être intégré dans une chaine de traitements distribués pour des services de traitement d'image de type « cloud services ». Le présent procédé 50 d'augmentation de résolution, selon l'un quelconque de ses modes de mise en oeuvre, peut donc être exécuté par un système de traitement constitué par un dispositif de traitement tel que décrit précédemment, ou encore par un système de traitement comportant plusieurs dispositifs de traitement reliés entre eux.

**Revendications**

1. - Procédé (50) d'augmentation de résolution spatiale d'une image multi-spectrale, dite « image MS », à partir d'une image panchromatique, dite « image PAN », de résolution spatiale supérieure à la résolution spatiale de l'image MS, ladite image MS étant constituée de pixels représentatifs de la réflectance multi-spectrale, dite « réflectance MS », ($\rho_{MS}$) d'une scène, ladite image PAN étant constituée de pixels représentatifs de la réflectance panchromatique, dite « réflectance PAN », ($\rho_{PAN}$) de ladite scène, **caractérisé en ce qu'**il comporte, pour une portion au moins de ladite scène :

   - une obtention (51) de valeurs particulières ($\hat{v}_{MS}$) de paramètres d'un modèle de scène, ledit modèle de scène permettant de simuler une réflectance de ladite portion de scène dans des bandes de longueurs d'ondes correspondant à l'image MS et à l'image PAN, respectivement appelées réflectance MS simulée ($\rho_{model-MS}$) et réflectance PAN simulée ($\rho_{model-PAN}$), en fonction d'hypothèses associées auxdits paramètres sur ladite portion de scène, lesdites valeurs particulières de paramètres étant obtenues en fonction d'une ressemblance entre la réflectance MS simulée et la réflectance MS pour ladite portion de scène,
   - une détermination (53) d'une variation relative ($\partial\rho_{MS}/\partial\rho_{PAN}$) de la réflectance MS simulée par rapport à la réflectance PAN simulée au voisinage desdites valeurs particulières de paramètres,
   - une estimation (541) d'un écart ($mod_{PAN}$) entre la réflectance PAN et une réflectance d'une image PAN à résolution spatiale diminuée obtenue par filtrage passe-bas de ladite image PAN, ledit écart étant appelé modulation PAN haute résolution spatiale,
   - une détermination (542) d'une image MS à résolution spatiale augmentée par sur-échantillonnage de ladite image MS et par ajout à la réflectance MS de l'image MS sur-échantillonnée ($\rho_{MS-high}$) d'un correctif correspondant à un produit de ladite modulation PAN haute résolution spatiale et de ladite variation relative.

2. - Procédé (50) selon la revendication 1, dans lequel pour l'estimation (541) de la modulation PAN haute résolution spatiale ($mod_{PAN}$), l'image PAN à résolution spatiale diminuée a une résolution spatiale correspondant à la résolution spatiale de l'image MS.

3. - Procédé (50) selon l'une des revendications 1 ou 2, dans lequel l'obtention (51) desdites valeurs particulières de paramètres comprend pour ladite portion de scène un paramétrage optimisé dudit modèle de scène par rapport à la ressemblance entre la réflectance MS simulée ($\rho_{model-MS}$) et la réflectance MS ($\rho_{MS}$).

4. - Procédé (50) selon l'une quelconque des revendications précédentes, dans lequel ladite détermination (52, 53) de la variation relative de la réflectance MS simulée par rapport à la réflectance PAN simulée comprend :

   - une détermination (52) d'un gradient ($\partial\hat{v}/\partial\rho_{PAN}$) de valeurs (v) de paramètres du modèle de scène par rapport à la réflectance PAN simulée ($\rho_{model-PAN}$) au voisinage de la réflectance PAN simulée ($\hat{\rho}_{PAN}$) correspondant auxdites valeurs particulières de paramètres, dite réflectance PAN simulée de référence,
   - une détermination d'une variation de la réflectance MS simulée ($\rho_{model-MS}$) en fonction des valeurs de paramètres (v) au voisinage desdites valeurs particulières de paramètres,
   - une composition de ladite variation de la réflectance MS simulée et dudit gradient des valeurs de paramètres, donnant ladite variation relative de la réflectance MS simulée par rapport à la réflectance PAN simulée.

5. - Procédé (50) selon la revendication 4, dans lequel la détermination (52) dudit gradient comprend pour ladite portion de scène un paramétrage optimisé dudit modèle de scène par rapport à une ressemblance entre la réflectance PAN simulée et un voisinage ($\hat{\rho}_{PAN} + \delta\rho_{PAN}$) de la réflectance PAN simulée de référence ($\hat{\rho}_{PAN}$).

6. - Procédé (50) selon la revendication 5, dans lequel ledit paramétrage optimisé comprend, pour la portion de scène considérée, une optimisation d'une fonction de coût (C) comportant :

   - un premier terme, dit « fonction de réflectance » ($C'_1$), représentatif d'une ressemblance entre le voisinage de la réflectance PAN simulée de référence et la réflectance PAN simulée pour les valeurs de paramètres considérées (v), et

- un deuxième terme, dit « fonction de connaissance a priori » (C2), représentatif d'une ressemblance entre les valeurs de paramètres considérées (v) et une connaissance a priori sur les paramètres du modèle de scène ($v_{prior}$).

**7.** - Procédé (50) selon la revendication 6, dans lequel la connaissance a priori sur les paramètres du modèle de scène est fonction desdites valeurs particulières de paramètres.

**8.** - Procédé (50) selon l'une quelconque des revendications précédentes, dans lequel la portion de scène correspond à un pixel et on détermine ladite variation relative pour chaque pixel.

**9.** - Procédé (50) selon l'une quelconque des revendications 1 à 7, dans lequel les pixels étant classifiés en groupes de pixels et la portion de scène correspondant à un desdits groupes de pixels, on détermine ladite variation relative pour chaque groupe de pixels.

**10.** - Procédé (50) selon la revendication 9, dans lequel on détermine ladite variation relative d'un groupe de pixels en fonction d'une valeur médiane ou d'une valeur moyenne des réflectances MS du groupe de pixels considéré.

**11.** - Procédé (50) selon l'une quelconque des revendications précédentes, dans lequel le modèle de scène comporte un modèle de réflectance au sol et un modèle atmosphérique.

**12.** - Procédé (50) selon l'une quelconque des revendications précédentes, comportant une conversion préalable des valeurs des pixels de l'image MS et de l'image PAN en valeurs de réflectance MS et de réflectance PAN au sol ou en sommet d'atmosphère.

**13.** - Produit programme d'ordinateur **caractérisé en ce qu'**il comporte un ensemble d'instructions de code de programme qui, lorsqu'elles sont exécutées par un processeur, configurent ledit processeur pour mettre en oeuvre un procédé (50) d'augmentation de résolution spatiale selon l'une des revendications 1 à 12.

**14.** - Système de traitement d'image (6) par augmentation de résolution spatiale d'une image multi-spectrale, dite « image MS », à partir d'une image panchromatique, dite « image PAN », de résolution spatiale supérieure à la résolution spatiale de l'image MS, ladite image MS étant constituée de pixels représentatifs d'une réflectance multi-spectrale, dite « réflectance MS » ($\rho_{MS}$) d'une scène, ladite image PAN étant constituée de pixels représentatifs d'une réflectance panchromatique, dite « réflectance PAN » ($\rho_{PAN}$) de ladite scène, **caractérisé en ce que** le système de traitement d'image comporte au moins un processeur (61) configuré, pour une portion au moins de ladite scène, pour :

- obtenir des valeurs particulières ($\hat{v}_{MS}$) de paramètres d'un modèle de scène, ledit modèle de scène permettant de simuler une réflectance de ladite portion de scène dans des bandes de longueurs d'ondes correspondant à l'image MS et à l'image PAN, respectivement appelées réflectance MS simulée ($\rho_{model-MS}$) et réflectance PAN simulée ($\rho_{model-PAN}$), en fonction d'hypothèses associées auxdits paramètres sur ladite portion de scène, lesdites valeurs particulières de paramètres étant obtenues en fonction d'une ressemblance entre la réflectance MS simulée et la réflectance MS pour ladite portion de scène,
- déterminer une variation relative ($\partial\rho_{MS}/\partial\rho_{PAN}$) de la réflectance MS simulée par rapport à la réflectance PAN simulée au voisinage desdites valeurs particulières de paramètres,
- estimer un écart ($mod_{PAN}$) entre la réflectance PAN et une réflectance d'une image PAN à résolution spatiale diminuée obtenue par filtrage passe-bas de ladite image PAN, ledit écart étant appelé modulation PAN haute résolution spatiale,
- déterminer une image MS à résolution spatiale augmentée par sur-échantillonnage de ladite image MS et, par ajout à la réflectance MS de l'image MS sur-échantillonnée ($\rho_{MS-high}$) d'un correctif correspondant à un produit de ladite modulation PAN haute résolution spatiale et de ladite variation relative,

ledit au moins un processeur (61) étant avantageusement configuré pour mettre en oeuvre un procédé (50) d'augmentation de résolution spatiale selon l'une des revendications 1 à 12.

**Patentansprüche**

**1.** Verfahren (50) zur Erhöhung der räumlichen Auflösung eines multispektralen Bildes, "MS-Bild" genannt, ausgehend von einem panchromatischen Bild, "PAN-Bild" genannt, mit einer räumlichen Auflösung, die größer ist als die räumliche Auflösung des MS-Bildes, wobei das MS-Bild aus Pixeln besteht, die für die multispektrale Reflektivität, "MS-Reflektivität" genannt, ($\rho_{MS}$), einer Szene repräsentativ sind, wobei das PAN-Bild aus Pixeln besteht, die für die panchromatische Reflektivität, "PAN-Reflektivität" genannt, ($\rho_{PAN}$), der Szene repräsentativ sind, **dadurch gekennzeichnet, dass** es mindestens für einen Bereich der Szene enthält:

- ein Erhalten (51) spezieller Werte ($\hat{v}_{MS}$) von Parametern eines Szenenmodells, wobei das Szenenmodell ermöglicht, eine Reflektivität des Szenenbereichs in Wellenlängenbändern zu simulieren, die dem MS-Bild und dem PAN-Bild entsprechen, die als simulierte MS-Reflektivität ($\rho_{model-MS}$) beziehungsweise simulierte PAN-Reflektivität ($\rho_{model-PAN}$) bezeichnet werden, basierend auf Annahmen, die den Parametern auf dem Szenenbereich zugeordnet sind, wobei die speziellen Werte der Parameter basierend auf einer Ähnlichkeit zwischen der simulierten MS-Reflektivität und der MS-Reflektivität für den Szenenbereich erhalten werden,
- ein Bestimmen (53) einer relativen Variation ($\partial\rho_{MS}/\partial\rho_{PAN}$) der simulierten MS-Reflektivität in Bezug auf die simulierte PAN-Reflektivität im Nahbereich der speziellen Werte der Parameter,
- ein Schätzen (541) einer Abweichung ($mod_{PAN}$) zwischen der Pan-Reflektivität und einer Reflektivität eines PAN-Bildes mit verminderter räumlicher Auflösung, das durch Tiefpassfilterung des PAN-Bildes erhalten wird, wobei die Abweichung als PAN-Modulation mit hoher räumlicher Auflösung bezeichnet wird,
- ein Bestimmen (542) eines MS-Bildes mit erhöhter räumlicher Auflösung durch Überabtastung des MS-Bildes und durch Addition auf die MS-Reflektivität des überabgetasteten MS-Bildes ($\rho_{MS-high}$) einer Korrektur, die einem Produkt der PAN-Modulation mit hoher räumlicher Auflösung und der relativen Variation entspricht.

2. Verfahren (50) nach Anspruch 1, wobei für die Schätzung (541) der PAN-Modulation mit hoher räumlicher Auflösung ($mod_{PAN}$) das Pan-Bild mit verminderter räumlicher Auflösung eine räumliche Auflösung aufweist, die der räumlichen Auflösung des MS-Bildes entspricht.

3. Verfahren (50) nach einem der Ansprüche 1 oder 2, wobei das Erhalten (51) der speziellen Werte der Parameter für den Szenenbereich eine optimierte Parametrierung des Szenenmodells in Bezug auf die Ähnlichkeit zwischen der simulierten MS-Reflektivität ($\rho_{model-MS}$) und der MS-Reflektivität ($\rho_{MS}$) umfasst.

4. Verfahren (50) nach einem der vorhergehenden Ansprüche, wobei die Bestimmung (52, 53) der relativen Variation der simulierten MS-Reflektivität in Bezug auf die simulierte PAN-Reflektivität umfasst:

- ein Bestimmen (52) eines Gradienten ($\partial\hat{v}/\partial\rho_{PAN}$) von Werten (v) von Parametern des Szenenmodell in Bezug auf die simulierte PAN-Reflektivität ($\rho_{model-PAN}$) im Nahbereich der simulierten PAN-Reflektivität ($\hat{\rho}_{PAN}$), die den speziellen Werten der Parameter, simulierte PAN-Referenz-Reflektivität genannt, entsprechen,
- ein Bestimmen einer Variation der simulierten MS-Reflektivität ($\rho_{model-MS}$) basierend auf den Werten der Parameter (v) im Nahbereich der speziellen Werte der Parameter,
- ein Zusammensetzen der Variation der simulierten MS-Reflektivität und des Gradienten der Werte der Parameter, das die relative Variation der simulierten MS-Reflektivität in Bezug zur simulierten PAN-Reflektivität ergibt.

5. Verfahren (50) nach Anspruch 4, wobei die Bestimmung (52) des Gradienten für den Szenenbereich eine optimierte Parametrierung des Szenenmodells in Bezug auf eine Ähnlichkeit zwischen der simulierten PAN-Reflektivität und einem Nahbereich ($\hat{\rho}_{PAN} + \delta\rho_{PAN}$) der PAN-Referenz-Reflektivität ($\hat{\rho}_{PAN}$) umfasst.

6. Verfahren (50) nach Anspruch 5, wobei die optimierte Parametrierung für den berücksichtigten Szenenbereich eine Optimierung einer Kostenfunktion (C') umfasst, enthaltend:

- einen ersten Term, "Reflektivitätsfunktion" genannt, ($C'_1$), der repräsentativ ist für eine Ähnlichkeit zwischen dem Nahbereich der simulierten PAN-Referenz-Reflektivität und der simulierten PAN-Reflektivität für die berücksichtigten Werte der Parameter (v), und
- einen zweiten Term, "A-priori-Kenntnis-Funktion" genannt, ($C'_2$), der repräsentativ ist für eine Ähnlichkeit zwischen den berücksichtigten Werten der Parameter (v) und einer A-priori-Kenntnis über die Parameter des Szenenmodells ($v_{prior}$).

7. Verfahren (50) nach Anspruch 6, wobei die A-priori-Kenntnis über die Parameter des Szenenmodells eine Funktion der speziellen Werte der Parameter ist.

8. Verfahren (50) nach einem der vorhergehenden Ansprüche, wobei der Szenenbereich einem Pixel entspricht und die relative Variation für jedes Pixel bestimmt wird.

9. Verfahren (50) nach einem der Ansprüche 1 bis 7, wobei die Pixel in Pixelgruppen eingeteilt sind und der Szenenbereich einer der Pixelgruppen entspricht, wobei die relative Variation für jede Pixelgruppe bestimmt wird.

10. Verfahren (50) nach Anspruch 9, wobei die relative Variation einer Pixelgruppe basierend auf einem Medianwert oder einem Mittelwert der MS-Reflektivitäten der berücksichtigten Pixelgruppe bestimmt wird.

11. Verfahren (50) nach einem der vorhergehenden Ansprüche, wobei das Szenenmodell ein Boden-Reflektivitätsmodell und ein atmosphärisches Modell enthält.

12. Verfahren (50) nach einem der vorhergehenden Ansprüche, eine Vorkonvertierung der Werte der Pixel des MS-Bildes und des PAN-Bildes in Werte der MS-Reflektivität und der PAN-Reflektivität am Boden oder am oberen Teil der Atmosphäre enthaltend.

13. Computerprogrammprodukt, **dadurch gekennzeichnet, dass** es eine Reihe von Programmcodebefehlen enthält, die, wenn sie von einem Prozessor ausgeführt werden, den Prozessor konfigurieren, um ein Verfahren (50) zur Erhöhung der räumlichen Auflösung nach einem der Ansprüche 1 bis 12 durchzuführen.

14. Bildverarbeitungssystem (6) durch Erhöhen der räumlichen Auflösung eines multispektralen Bildes, "MS-Bild" genannt, ausgehend von einem panchromatischen Bild, "PAN-Bild" genannt, mit einer räumlichen Auflösung, die größer ist als die räumliche Auflösung des MS-Bildes, wobei das MS-Bild aus Pixeln besteht, die für die multispektrale Reflektivität, "MS-Reflektivität" genannt, ($\rho_{MS}$), einer Szene repräsentativ sind, wobei das PAN-Bild aus Pixeln besteht, die für eine panchromatische Reflektivität, "PAN-Reflektivität" genannt, ($\rho_{PAN}$), der Szene repräsentativ sind, **dadurch gekennzeichnet, dass** das Bildverarbeitungssystem mindestens einen Prozessor (61) enthält, der konfiguriert ist, für mindestens einen Bereich der Szene, zum:

- Erhalten spezieller Werte ($\hat{v}_{MS}$) von Parametern eines Szenenmodells, wobei das Szenenmodell ermöglicht, eine Reflektivität des Szenenbereichs in Wellenlängenbändern zu simulieren, die dem MS-Bild und dem PAN-Bild entsprechen, die als simulierte MS-Reflektivität ($\rho_{model-MS}$) beziehungsweise simulierte PAN-Reflektivität ($\rho_{model-PAN}$) bezeichnet werden, basierend auf Annahmen, die den Parametern auf dem Szenenbereich zugeordnet sind, wobei die speziellen Werte der Parameter basierend auf einer Ähnlichkeit zwischen der simulierten MS-Reflektivität und der MS-Reflektivität für den Szenenbereich erhalten werden,
- Bestimmen einer relativen Variation ($\partial\rho_{MS}/\partial\rho_{PAN}$) der simulierten MS-Reflektivität in Bezug auf die simulierte PAN-Reflektivität im Nahbereich der speziellen Werte der Parameter,
- Schätzen einer Abweichung ($mod_{PAN}$) zwischen der Pan-Reflektivität und einer Reflektivität eines PAN-Bildes mit verminderter räumlicher Auflösung, das durch Tiefpassfilterung des PAN-Bildes erhalten wird, wobei die Abweichung als PAN-Modulation mit hoher räumlicher Auflösung bezeichnet wird,
- Bestimmen eines MS-Bildes mit erhöhter räumlicher Auflösung durch Überabtastung des MS-Bildes und durch Addition auf die MS-Reflektivität des überabgetasteten MS-Bildes ($\rho_{MS-high}$) einer Korrektur, die einem Produkt der PAN-Modulation mit hoher räumlicher Auflösung und der relativen Variation entspricht,

wobei mindestens ein Prozessor (61) vorteilhafterweise konfiguriert ist, um ein Verfahren (50) zur Erhöhung der räumlichen Auflösung nach einem der Ansprüche 1 bis 12 durchzuführen.

**Claims**

1. - Method (50) for increasing spatial resolution of a multispectral image, called "MS image", using a panchromatic image, called "PAN image", having a spatial resolution greater than the spatial resolution of the MS image, said MS image consisting of pixels representative of the multispectral reflectance, hereafter "MS reflectance" ($\rho_{MS}$) of a scene, said PAN image consisting of pixels representative of the panchromatic reflectance, hereafter "PAN reflectance" ($\rho_{PAN}$) of said scene, **characterised in that** it includes, for at least a portion of said scene:

- obtaining (51) particular values ($\hat{v}_{MS}$) of parameters of a scene model, said scene model allowing to simulate a reflectance of said scene portion in bands of wavelengths corresponding to the MS image and to the PAN image, respectively called simulated MS reflectance ($\rho_{model-MS}$) and simulated PAN reflectance ($\rho_{model-PAN}$), according to hypotheses associated with said parameters on said scene portion, said particular values of parameters being obtained according to a resemblance between the simulated MS reflectance and the MS reflectance for said scene portion,
- determining (53) a relative variation ($\delta\rho_{MS}/\partial\rho_{PAN}$) in the simulated MS reflectance with respect to the simulated PAN reflectance near said particular values of parameters,
- estimating (541) a difference ($mod_{PAN}$) between the PAN reflectance and a reflectance of a PAN image with reduced spatial resolution obtained by low-pass filtering of the PAN image, this difference being called high spatial resolution PAN modulation,
- determining (542) an MS image with increased spatial resolution by oversampling of the MS image, by adding to the MS reflectance ($\rho_{MS\text{-}high}$) a correction corresponding to a product of said high spatial resolution PAN modulation and said relative variation.

2. - Method (50) according to claim 1, wherein for the estimation (541) of the high spatial resolution PAN modulation ($mod_{PAN}$), the PAN image with reduced spatial resolution has a spatial resolution corresponding to the spatial resolution of the MS image.

3. - Method (50) according to one of claims 1 or 2, wherein obtaining (51) said particular values of parameters comprises for said scene portion an optimised parameterisation of said scene model with respect to the resemblance between the simulated MS reflectance ($\rho_{model\text{-}MS}$) and the MS reflectance ($\rho_{MS}$).

4. - Method (50) according to any one of the previous claims, wherein said determination (52, 53) of the relative variation in the simulated MS reflectance with respect to the simulated PAN reflectance comprises:

- determining (52) a gradient ($\partial\hat{v}/\partial\rho_{PAN}$) of values (v) of parameters of the scene model with respect to the simulated PAN reflectance ($\rho_{model\text{-}PAN}$) near the simulated PAN reflectance ($\hat{\rho}_{PAN}$) corresponding to said particular values of parameters, called reference simulated PAN reflectance,
- determining a variation in the simulated MS reflectance ($\rho_{model\text{-}MS}$) according to the values of parameters (v) near said particular values of parameters,
- composing said variation in the simulated MS reflectance and said gradient of the values of parameters, giving said relative variation in the simulated MS reflectance with respect to the simulated PAN reflectance.

5. - Method (50) according to claim 4, wherein the determination (52) of said gradient comprises for said scene portion an optimised parameterisation of said scene model with respect to a resemblance between the simulated PAN reflectance and a vicinity ($\hat{\rho}_{PAN} + \delta\rho_{PAN}$) of the reference simulated PAN reflectance ($\hat{\rho}_{PAN}$).

6. - Method (50) according to claim 5, wherein said optimised parameterisation comprises, for the scene portion considered, an optimisation of a cost function (C) including:

- a first term, called "reflectance function" ($C'_1$), representative of a resemblance between the vicinity of the reference simulated PAN reflectance and the simulated PAN reflectance for the values of parameters considered (v), and
- a second term, called "function of a priori knowledge" ($C'_2$), representative of a resemblance between the values of parameters considered (v) and an a priori knowledge of the parameters of the scene model ($v_{prior}$).

7. - Method (50) according to claim 6, wherein the a priori knowledge of the parameters of the scene model is a function of said particular values of parameters.

8. - Method (50) according to any one of the previous claims, wherein the scene portion corresponds to a pixel and said relative variation is determined for each pixel.

9. - Method (50) according to any one of claims 1 to 7, wherein the pixels being classified into groups of pixels and the scene portion corresponding to one of said groups of pixels, said relative variation is determined for each group of pixels.

10. - Method (50) according to claim 9, wherein said relative variation of a group of pixels is determined according to a median value or an average value of the MS reflectances of the group of pixels considered.

11. - Method (50) according to any one of the previous claims, wherein the scene model includes a model of reflectance on the ground and an atmospheric model.

**12.** - Method (50) according to any one of the previous claims, including a previous conversion of the values of the pixels of the MS image and of the PAN image into values of MS reflectance and of PAN reflectance on the ground or at the top of the atmosphere.

**13.** - Computer program product **characterised in that** it includes a set of program code instructions which, when they are executed by a processor, configure said processor to implement a method (50) for increasing spatial resolution according to one of claims 1 to 12.

**14.** - System (6) for image processing by increasing spatial resolution of a multispectral image, called "MS image", using a panchromatic image, called "PAN image", having a spatial resolution greater than the spatial resolution of the MS image, said MS image consisting of pixels representative of a multispectral reflectance, hereafter "MS reflectance" ($\rho_{MS}$) of a scene, said PAN image consisting of pixels representative of a panchromatic reflectance, hereafter "PAN reflectance" ($\rho_{PAN}$) of said scene, **characterised in that** the image-processing system includes at least one processor (61) configured, for at least a portion of said scene, to:

- obtain particular values ($\hat{v}_{MS}$) of parameters of a scene model, said scene model allowing to simulate a reflectance of said scene portion in bands of wavelengths corresponding to the MS image and to the PAN image, respectively called simulated MS reflectance ($\rho_{model-MS}$) and simulated PAN reflectance ($\rho_{model-PAN}$), according to hypotheses associated with said parameters on said scene portion, said particular values of parameters being obtained according to a resemblance between the simulated MS reflectance and the MS reflectance for said scene portion,
- determine a relative variation ($\partial\rho_{MS}/\partial\rho_{PAN}$) in the simulated MS reflectance with respect to the simulated PAN reflectance near said particular values of parameters,
- estimate a difference ($mod_{PAN}$) between the PAN reflectance and a reflectance of a PAN image with reduced spatial resolution obtained by low-pass filtering of the PAN image, said difference being called high spatial resolution PAN modulation,
- determine an MS image with increased spatial resolution by oversampling of the MS image, by adding to the MS reflectance of the oversampled MS image ($\rho_{MS-high}$) a correction corresponding to a product of said high spatial resolution PAN modulation and said relative variation,

said at least one processor (61) being advantageously configured to implement a method (50) for increasing spatial resolution according to one of claims 1 to 12.

**Fig. 1**

image MS          image PAN

modèle
de scène

- 51 -

- 52 -

- 53 -

- 54 -

50

**Fig. 2**

image MS

image PAN

modèle
de scène

- 51 -

$N_p$

- 52 -

$N_p$

- 53 -

$N_p$

50

- 540 -

- 542 -

- 541 -

54

**Fig. 3**

image MS

image PAN

modèle
de scène

- 51 -

- 55 -

$N_m$

- 52 -

$N_m$

- 53 -

$N_m$

50

- 56 -

- 540 -

- 542 -

- 541 -

54

**Fig. 4**

image MS

image PAN

- 57 -

- 51 - $N_g$

- 52 - $N_g$

- 53 - $N_g$

modèle de scène

- 540 -

- 542 -

- 541 -

- 54

50

**Fig. 5**

image MS

image PAN

- 57 -

- 51 - $N_g$

- 55 -

- 52 - $N_g$

- 53 - $N_g$

modèle de scène

- 56 -

- 540 -

- 542 -

- 541 -

- 54

50

**Fig. 6**

6

| Communications | | IU |

61

64

63

Processeur(s)

65

62

| Visualisation | | Stockage |

**Fig. 7**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2018210647 A

**Littérature non-brevet citée dans la description**

- **S. LOLLI ; L. ALPARONE ; A. GARZELLI ; G. VIVONE.** Haze Correction for Contrast-Based Multispectral Pansharpening. *IEEE Geoscience and Remote Sensing Letters,* Décembre 2017, vol. 14 (12
- **A. GARZELLI ; N. AIAZZI ; L. ALPARONE ; S. LOLLI ; G. VIVONE.** Multispectral Pansharpening with Radiative Transfer-Based Detail-Injection Modeling for Preserving Changes in Végétation Cover. *XP055538580,* 09 Mai 2018
- **H. A. ALY ; G. SHARMA.** A Regularized Model-Based Optimization Framework for Pan-Sharpening. *IEEE Transactions on Image Processing,* 01 Juin 2014, vol. 23 (6
- **JACQUEMOUD S. ; VERHOEF W ; BARET W ; BACOUR C. ; ZARCO-TEJADA P.J ; ASNER G.P ; FRANÇOIS C ; USTIN, S.L.** PROSPECT + SAIL Models : A Review of Use for Végétation Characterization. *Remote Sensing of Environment,* vol. 113, S56-S66
- **BABIN et al.** Variations in the Light Absorption Coefficients of Phytoplankton, Nonalgal Particles, and Dissolved Organic Matter in Coastal Waters Around Europe. *Journal of Geophysical Research,* vol. 108, 3211
- **KNEISYS F.X. et al.** Users Guide to LOWTRAN 7. *Air Force Geophysics Lab Hanscom AFB MA,* 1988